# EUROPEAN PATENT APPLICATION

(11) **EP 4 571 986 A1**
(43) Date of publication of application: **18.06.2025**
(21) Application number: 23855976.9
(22) Date of filing: 08.02.2023
(51) Int. Cl.: H01M 50/30

(54) **BATTERY CELL, BATTERY AND ELECTRIC DEVICE**

(30) Priority: 25.08.2022 WO PCT/CN2022/114890
(71) Applicant: Contemporary Amperex Technology (Hong Kong) Limited, Hong Kong (HK)
(72) Inventor: PU, Yujie, Ningde, Fujian 352100 (CN); LI, Yao, Ningde, Fujian 352100 (CN); CHEN, Xiaobo, Ningde, Fujian 352100 (CN); QUAN, Chao, Ningde, Fujian 352100 (CN)
(74) Representative: Ziebig Hengelhaupt Intellectual Property Attorneys Patentanwaltskanzlei PartGmbB
(86) International application number: PCT/CN2023/075069
(87) International publication number: WO 2024/040879

(57) **Abstract**

The present application provides a battery cell, a battery and an electrical device. The battery cell includes an electrode assembly, a shell and an insulator. The shell is configured to accommodate the electrode assembly, where the shell includes a wall portion, and the wall portion is provided with a first pressure relief region configured to be opened when the battery cell is under thermal runaway. The insulator is at least partially disposed between the electrode assembly and the wall portion to dielectrically insulate the electrode assembly and the wall portion, where the insulator is provided with a second pressure relief region at a position corresponding to the first pressure relief region, and the second pressure relief region is configured to allow gas to reach the first pressure relief region through the insulator when the battery cell is under thermal runaway. By disposing the insulator of the battery cell between the wall portion and the electrode assembly, the wall portion and the electrode assembly can be dielectrically insulated, thereby improving the safety of the battery cell. When the battery cell is under thermal runaway, the second pressure relief region allows gas to be relieved of pressure from the first pressure relief region through the insulator, which ensures high safety.

## Description

### CROSS-REFERENCE TO RELATED APPLICATIONS

The present application claims priority to International Patent Application No. PCT/CN2022/114890, filed on August 25, 2022 and entitled "BATTERY CELL, BATTERY, AND ELECTRICAL DEVICE", which is incorporated herein by reference in its entirety.

### TECHNICAL FIELD

The present application relates to the field of batteries, and in particular, to a battery cell, a battery, and an electrical device.

### BACKGROUND

Batteries are widely applied in the field of new energy, for example, to electric vehicles, new energy vehicles, and so on. New energy vehicles and electric vehicles have become a new trend in the development of the automotive industry. During the development of battery technologies, it is necessary to consider various design factors, such as battery life, energy density, discharge capacity, charge and discharge rates, and other performance parameters. In addition, it is also necessary to consider the safety of the battery. However, the safety of current batteries is relatively poor.

### SUMMARY

An objective of embodiments of the present application is to provide a battery cell, a battery, and an electrical device, with a view to solving the problem of poor safety of batteries in the related art.

According to a first aspect, embodiments of the present application provide a battery cell. The battery cell includes an electrode assembly, a shell and an insulator. The shell is configured to accommodate the electrode assembly, where the shell includes a wall portion, and the wall portion is provided with a first pressure relief region configured to be opened when the battery cell is under thermal runaway; and the insulator is at least partially disposed between the electrode assembly and the wall portion to dielectrically insulate the electrode assembly and the wall portion; where the insulator is provided with a second pressure relief region at a position corresponding to the first pressure relief region, and the second pressure relief region is configured to allow gas to reach the first pressure relief region through the insulator when the battery cell is under thermal runaway.

In the above technical solution, by disposing the insulator between the electrode assembly of the battery cell and the wall portion provided with the first pressure relief region, the wall portion and the electrode assembly can be dielectrically insulated, thereby improving the safety of the battery cell. The insulator is provided with the second pressure relief region corresponding to the first pressure relief region in position. When the battery cell is under thermal runaway and pressure relief is required, the second pressure relief region allows gas to be relieved of pressure from the first pressure relief region through the insulator, which ensures high safety.

In an optional technical solution put forward in an embodiment of the present application, the second pressure relief region is configured to be opened when the battery cell is under thermal runaway.

In the above technical solution, when the battery cell is in normal use, the second pressure relief region separates the electrode assembly and the first pressure relief region. Even if the battery cell is subjected to vibration, an electrolyte solution in the shell is less prone to wash against the first pressure relief region, and therefore, burst pressure of the first pressure relief region is not affected.

In an optional technical solution put forward in an embodiment of the present application, the wall portion is provided with a pressure relief slot, and the first pressure relief region is configured to be opened along the pressure relief slot when the battery cell is under thermal runaway; and in a first direction, the insulator and the wall portion are disposed opposite to each other, and a projection of the insulator covers the pressure relief slot.

In the above technical solution, the pressure relief slot is at a relatively fragile position on the wall portion. When the battery cell is under thermal runaway, the first pressure relief region is opened along the pressure relief slot. By making the projection of the insulator in the first direction cover the pressure relief slot, the electrolyte solution is less prone to wash against the first pressure relief region, and therefore, burst pressure of the first pressure relief region is not affected.

In an optional technical solution put forward in an embodiment of the present application, in the first direction, a projection of the second pressure relief region covers a projection of the first pressure relief region.

In the above technical solution, by making the projection of the second pressure relief region in the first direction cover the projection of the first pressure relief region, the electrolyte solution is less prone to wash against the first pressure relief region, and therefore, burst pressure of the first pressure relief region is not affected.

In an optional technical solution put forward in an embodiment of the present application, in the first direction, the projection of the second pressure relief region covers the pressure relief slot.

In the above technical solution, the projection of the second pressure relief region in the first direction covers the pressure relief slot. When the battery cell is in normal use, the second pressure relief region can block the electrolyte solution to reduce the risk that the electrolyte solution washes against the pressure relief slot. When the battery cell is under thermal runaway, the second pressure relief region is opened to allow gas to reach the pressure relief slot more quickly, and make a bottom wall of the pressure relief slot burst open in time. In this way, the pressure can be relieved quickly, thereby improving the safety of the battery cell.

In an optional technical solution put forward in an embodiment of the present application, the insulator is provided with a fragile region disposed along an edge of the second pressure relief region.

In the above technical solution, by disposing the fragile region on the insulator, the second pressure relief region can be easily opened from the fragile region when the battery cell is under thermal runaway. Since the fragile region is disposed along the edge of the second pressure relief region, when the battery cell is under thermal runaway, the second pressure relief region is opened along the edge to provide a larger opening for gas to pass through.

In an optional technical solution put forward in an embodiment of the present application, the fragile region is disposed around an outer side of a projection of the first pressure relief region on the insulator in the first direction.

In the above technical solution, since the fragile region is disposed along the edge of the second pressure relief region, and disposed around the outer side of the projection of the first pressure relief region on the insulator in the first direction, a range of the second pressure relief region is greater than a range of the first pressure relief region. In other words, in the first direction, the projection of the second pressure relief region on the wall portion covers the first pressure relief region. In this way, when the battery cell is under thermal runaway, an area of an opening formed when the second pressure relief region is opened is greater than an area of the first pressure relief region, which is conducive to smooth pressure relief.

In an optional technical solution put forward in an embodiment of the present application, the pressure relief slot is formed on the wall portion and is disposed along an edge of the first pressure relief region, and the fragile region is disposed around an outer side of a projection of the pressure relief slot on the insulator in the first direction.

In the above technical solution, by disposing the pressure relief slot on the wall portion, a fragile position is formed so that the first pressure relief region can be opened from the fragile position when the battery cell is under thermal runaway. Since the pressure relief slot is disposed along the edge of the first pressure relief region, when the battery cell is under thermal runaway, the first pressure relief region is opened along the edge to provide a larger opening for gas to pass through.

In an optional technical solution put forward in an embodiment of the present application, the battery cell includes a pressure relief part, a pressure relief hole is formed on the wall portion, the pressure relief part covers the pressure relief hole, the pressure relief slot is formed on the pressure relief part, and the indentation is disposed around an outer side of a projection of the pressure relief slot on the insulator in the first direction.

In the above technical solution, by disposing the pressure relief slot on the pressure relief part, a fragile position is formed so that the first pressure relief region can be opened from the fragile position when the battery cell is under thermal runaway.

In an optional technical solution put forward in an embodiment of the present application, the fragile region is disposed around an outer side of a projection of the pressure relief hole on the insulator in the first direction.

In the above technical solution, by disposing the fragile region around the outer side of the projection of the pressure relief hole on the insulator in the first direction, if the fragile region penetrates through the insulator, when the battery cell is in normal use, instead of flowing directly to the pressure relief part after passing through the fragile region, the electrolyte solution first collides with the wall portion to change the flow direction, and then flows to the pressure relief part after impact force is reduced, so that the pressure relief part is less prone to be washed against by the electrolyte solution. In addition, when the battery cell is under thermal runaway, an open area of the second pressure relief region is greater than the area of the pressure relief hole, which is conducive to smooth pressure relief.

In an optional technical solution put forward in an embodiment of the present application, the fragile region includes a plurality of fragile sections, and the plurality of fragile sections are disposed at intervals in the circumferential direction of the second pressure relief region.

In the above technical solution, by disposing a plurality of fragile sections, when the battery cell is under thermal runaway, the second pressure relief region can be opened from the position where the plurality of fragile sections are located, so that gas can be relieved of pressure from the first pressure relief region through the insulator. Since the plurality of fragile sections are disposed at intervals in the circumferential direction of the second pressure relief region, the part between two adjacent fragile sections serves as a reinforcing rib, so that the strength of the second pressure relief region is high, and even if the battery cell is subjected to large vibration, the second pressure relief region is unlikely to be opened by mistake.

In an optional technical solution put forward in an embodiment of the present application, a fragile section is in a shape of a strip, and a width of the fragile section is D1 which satisfies: D1 ≤ 2 mm.

In the above technical solution, the width of the fragile section is less than 2 mm, which actually also defines the width of a remaining part between two adjacent fragile sections. The smaller the width of this part, the easier it is to open the second pressure relief region when the battery cell is under thermal runaway. If D1 > 2 mm, the width of the remaining part between two adjacent fragile sections is also greater than 2 mm. As a result, such large width of this part causes the failure to open the second pressure relief region in time when the battery cell is under thermal runaway, and the failure to relieve pressure of the battery cell in time.

In an optional technical solution put forward in an embodiment of the present application, in the circumferential direction of the second pressure relief region, a distance between two adjacent fragile sections is D2 which satisfies: D2 ≤ 10 mm.

In the above technical solution, the distance between two adjacent fragile sections is also the length of the remaining part between two adjacent fragile sections. The smaller the length of this part, the easier it is to open the second pressure relief region when the battery cell is under thermal runaway. If D2 > 10 mm, the length of the remaining part between two adjacent fragile sections is also greater than 10 mm. As a result, such large length of this part causes the failure to open the second pressure relief region in time when the battery cell is under thermal runaway, and the failure to relieve pressure of the battery cell in time.

In an optional technical solution put forward in an embodiment of the present application, in a direction perpendicular to the first direction, a distance between the fragile region and the first pressure relief region is D3 which satisfies: D3 ≤ 3 mm.

In the above technical solution, by limiting the distance between the fragile region and the first pressure relief region in the direction perpendicular to the first direction, the area relationship between the second pressure relief region and the first pressure relief region is actually limited. The area of the second pressure relief region is greater than the area of the first pressure relief region but should not be too large, otherwise when the second pressure relief region is opened, the second pressure relief region is separated from the insulator, and a separated part may fall towards the first pressure relief region and thus block the first pressure relief region, which affects the pressure relief in the first pressure relief region.

In an optional technical solution put forward in an embodiment of the present application, the fragile region is a closed structure extending along a closed trajectory.

In the above technical solution, the fragile region is disposed along the edge of the second pressure relief region in the circumferential direction. In this way, when the battery cell is under thermal runaway, the second pressure relief region can be easily opened.

In an optional technical solution put forward in an embodiment of the present application, the insulator is provided with an indentation, a slot or through holes to form the fragile region.

In the above technical solution, by forming an indentation or a slot on the insulator, the insulator is thinned to form a fragile position, which makes it convenient to burst out when the battery cell is under thermal runaway. By forming a plurality of through holes on the insulator, a region between two adjacent through holes is easily breakable, which makes it convenient to burst out when the battery cell is under thermal runaway.

In an optional technical solution put forward in an embodiment of the present application, the melting point of the fragile region is lower than the melting point of the insulator.

In the above technical solution, when the battery cell is under thermal runaway, the temperature of gas is high, and the high-temperature gas will melt the fragile region, so that the second pressure relief region is opened, thereby allowing gas to reach the first pressure relief region through the insulator.

In an optional technical solution put forward in an embodiment of the present application, the insulator is provided with an indentation, a slot or through holes, the indentation, the slot or each through hole is filled with a filler, and a melting point of the filler is lower than a melting point of the insulator.

In the above technical solution, by forming an indentation or a slot on the insulator, the insulator is thinned to form a fragile position, which makes it convenient to burst out when the battery cell is under thermal runaway. By forming a plurality of through holes on the insulator, a region between two adjacent through holes is easily breakable, which makes it convenient to burst out when the battery cell is under thermal runaway. The insulator is filled in the indentation, the slot or the through holes, so that the electrolyte solution is less prone to enter the indentation or the slot, or the electrolyte solution is less prone to flow to the wall portion through the through holes. In this way, the electrolyte solution in the battery cell can infiltrate the electrode assembly, which avoids the waste of the electrolyte solution.

In an optional technical solution put forward in an embodiment of the present application, the insulator is provided with an indentation or a slot to form the fragile region, the insulator is provided with a first surface facing towards the wall portion, and the indentation or the slot is disposed on the first surface.

In the above technical solution, by disposing the indentation or the slot on the first surface, the electrolyte solution is less prone to enter the indentation or slot, and the electrolyte solution in the battery cell can infiltrate the electrode assembly, which avoids the waste of the electrolyte solution.

In an optional technical solution put forward in an embodiment of the present application, the fragile region includes a plurality of slot sections and a plurality of hole sections, and in the circumferential direction of the second pressure relief region, the slot sections and the hole sections are disposed alternately; and in the first direction, the insulator is provided with a first surface and a second surface opposite to each other, each of the slot sections is recessed from the first surface towards the second surface, and each of the hole sections runs through the first surface and the second surface.

In the above technical solution, an indentation depth of the slot section is different from an indentation depth of the hole section. The hole section runs through the first surface and the second surface, so the indentation depth of the hole selection is larger. The slot section is recessed from the first surface towards the second surface, so the indentation depth of the slot section is smaller. By disposing the plurality of slot sections and the plurality of hole sections at intervals in the circumferential direction of the second pressure relief region, when the battery cell is under thermal runaway, the second pressure relief region can be easily opened.

In an optional technical solution put forward in an embodiment of the present application, the insulator is provided with a slot, and a bottom wall of the slot is formed into the second pressure relief region.

In the above technical solution, by disposing the slot on the insulator, a fragile position is formed. When the battery cell is under thermal runaway, the bottom wall of the slot is opened to allow gas to be discharged from the first pressure relief region through the insulator.

In an optional technical solution put forward in an embodiment of the present application, a melting point of the second pressure relief region is lower than the melting point of the insulator.

In the above technical solution, when the battery cell is in normal use, the second pressure relief region separates the electrode assembly and the first pressure relief region. Even if the battery cell is subjected to vibration, an electrolyte solution in the shell is less prone to wash against the first pressure relief region, and therefore, burst pressure of the first pressure relief region is not affected. When the battery cell is under thermal runaway, the temperature of gas is high, and the high-temperature gas will melt the second pressure relief region, thereby allowing gas to be relieved of pressure from the first pressure relief region through the insulator, which ensures high safety.

In an optional technical solution put forward in an embodiment of the present application, a melting point of the second pressure relief region is M which satisfies: 80°C ≤ M ≤ 180°C.

In the above technical solution, a material with a melting point of 80°C to 180°C is selected as the second pressure relief region, which can not only ensure that the second pressure relief region can be melted by high-temperature gas when the battery cell is under thermal runaway, but also reduce the risk that the second pressure relief region is melted during normal operation of the battery cell. When M < 80°C, the second pressure relief region may be melted under a normal operating temperature of the battery cell, causing the electrolyte solution to wash against the first pressure relief region and thus affect the burst pressure of the first pressure relief region. When M > 180°C, the second pressure relief region has a high melting point and is not easy to melt under the action of high-temperature gas, and as a result, the pressure of the battery cell cannot be relieved or cannot be relieved in a timely manner.

In an optional technical solution put forward in an embodiment of the present application, the insulator is provided with a plurality of the second pressure relief regions, and at least a part of the second pressure relief regions are configured to be opened when the battery cell is under thermal runaway; and in the first direction, the insulator and the wall portion are disposed opposite to each other, and the projection of the first pressure relief region on the insulator in the first direction covers at least a part of the second pressure relief regions.

In the above technical solution, the insulator is provided with a plurality of second pressure relief regions. When the battery cell is under thermal runaway, at least a part of the second pressure relief regions are opened to allow gas to be relieved of pressure from the first pressure relief region through the insulator, which ensures high safety. By disposing the plurality of second pressure relief regions, the part between two adjacent second pressure relief regions can achieve a reinforcing effect, so that the strength of the insulator can be easily ensured to support the electrode assembly to a certain extent.

In an optional technical solution put forward in an embodiment of the present application, a first portion of the second pressure relief regions are located within the range of the projection of the first pressure relief region on the insulator in the first direction, and a second portion of the second pressure relief regions are located outside the range of the projection of the first pressure relief region on the insulator in the first direction.

In the above technical solution, the first portion of the second pressure relief regions are disposed directly opposite to the first pressure relief region, so that when the battery cell is under thermal runaway, gas can be more quickly relieved of pressure from the first pressure relief region through the insulator. The second portion of the second pressure relief regions are deviated from the first pressure relief region, so that the second portion of the second pressure relief regions are opened when the battery cell is under thermal runaway, thereby increasing the area for gas to pass through the insulator.

In an optional technical solution put forward in an embodiment of the present application, in the first direction, the insulator is provided with the first surface facing towards the wall portion, and an exhaust slot is disposed on the first surface and is configured to guide gas from the second portion of the second pressure relief regions to the first pressure relief region when the battery cell is under thermal runaway.

In the above technical solution, the gap between the insulator and the wall portion is small, so that gas discharged from the second portion of the second pressure relief regions is less prone to flow to the first pressure relief region. By disposing the exhaust slot on the first surface, a large gap is formed between the bottom wall of the exhaust slot and the wall portion, so that gas discharged from the second portion of the second pressure relief regions can quickly flow to the first pressure relief region through the exhaust slot, thereby increasing the pressure relief speed.

In an optional technical solution put forward in an embodiment of the present application, the exhaust slot extends to the second portion of the second pressure relief regions, and the projection of the first pressure relief region on the insulator in the first direction covers a part of the exhaust slot.

In the above technical solution, when the battery cell is under thermal runaway, the second portion of the second pressure relief regions are opened, and gas enters the exhaust slot from the second portion of the second pressure relief regions, and flows to the first pressure relief region under the guidance of the exhaust slot, which is conducive to increasing the pressure relief speed and achieving smooth pressure relief.

In an optional technical solution put forward in an embodiment of the present application, the insulator is provided with a plurality of fragile regions, where the fragile regions correspond to the second pressure relief regions one by one, and each of the fragile regions is disposed along an edge of the corresponding second pressure relief region.

In the above technical solution, by disposing a plurality of fragile regions on the insulator, the second pressure relief region can be easily opened from the fragile regions when the battery cell is under thermal runaway. Since the fragile regions are disposed along the edge of the second pressure relief region, when the battery cell is under thermal runaway, the second pressure relief region is opened along the edge to provide a larger opening for gas to pass through.

In an optional technical solution put forward in an embodiment of the present application, a through hole is formed on the insulator, and a region defined by peripheral walls of the through hole is the second pressure relief region.

In the above technical solution, the second pressure relief region is a region enclosed by the through hole formed on the insulator. In this way, gas can reach the first pressure relief region through the insulator no matter the battery cell is in normal use or under thermal runaway.

In an optional technical solution put forward in an embodiment of the present application, the insulator is a flat plate structure.

In the above technical solution, the insulator is designed as a flat plate structure. On the one hand, the flat plate structure occupies less volume of the battery cell; on the other hand, the flat plate structure can achieve a good supporting effect on the electrode assembly, and the electrode assembly is less prone to damage.

In an optional technical solution put forward in an embodiment of the present application, a thickness of the insulator is N which satisfies: 0.5 mm ≤ N ≤ 10 mm.

In the above technical solution, the thickness of the insulator is limited within a range of 0.5 mm to 10 mm, which can not only ensure the insulating effect and supporting capacity of the insulator, but also make the insulator occupy less space inside the battery cell. When N < 0.5 mm, the insulator has a small thickness, and poor supporting capacity and poor insulating effect (relatively easy to be broken down). When N > 10 mm, the thickness of the insulator is larger, which is not conducive to the improvement of the energy density of the battery cell.

In an optional technical solution put forward in an embodiment of the present application, the battery cell includes an electrode terminal, the shell includes a first wall on which the electrode terminal is disposed, the electrode terminal is electrically connected with the electrode assembly, and the first wall is a wall different from the wall portion.

In the above technical solution, the electrode terminal can output electric energy from or input electric energy to the battery cell. The electrode terminal and the first pressure relief region are disposed on different walls, which omits the operation of forming a through hole on the insulator to allow the electrode terminal to be electrically connected with the electrode assembly.

According to a second aspect, an embodiment of the present application provides a battery, the battery including a box and the battery cell described above.

According to a third aspect, an embodiment of the present application provides an electrical device. The electrical device includes the battery described above. The battery is configured to provide electrical energy for the electrical device.

### BRIEF DESCRIPTION OF DRAWINGS

To describe technical solutions in embodiments of the present application more clearly, the following outlines the drawings to be used in the embodiments. Understandably, the following drawings show merely some embodiments of the present application, and therefore, are not intended to limit the scope. A person of ordinary skill in the art may derive other related drawings from the drawings without making any creative efforts.
FIG. 1 is a schematic structural diagram of a vehicle according to some embodiments of the present application;
FIG. 2 is an exploded view of a battery provided according to some embodiments of the present application.
FIG. 3 is an exploded view of a battery cell according to some embodiments of the present application;
FIG. 4 is a schematic front view of an insulator according to some embodiments of the present application.
FIG. 5 is a cross-sectional view of FIG. 4 sectioned along a line B-B.
FIG. 6 is a schematic front view of an insulator according to some other embodiments of the present application.
FIG. 7 is a cross-sectional view of FIG. 6 sectioned along a line C-C.
FIG. 8 is a schematic front view of an insulator according to still other embodiments of the present application.
FIG. 9 is a cross-sectional view of FIG. 8 sectioned along a line D-D.
FIG. 10 is a schematic front view of an insulator according to yet other embodiments of the present application.
FIG. 11 is a cross-sectional view of FIG. 10 sectioned along a line E-E.
FIG. 12 is a schematic front view of an insulator according to still some other embodiments of the present application.
FIG. 13 is a cross-sectional view of FIG. 12 sectioned along a line F-F.
FIG. 14 is a schematic front view of an insulator according to yet some other embodiments of the present application.
FIG. 15 is a schematic front view of an insulator according to still yet some other embodiments of the present application.
FIG. 16 is a cross-sectional view of FIG. 15 sectioned along a line G-G.
FIG. 17 is a schematic front view of an insulator according to yet some other embodiments of the present application.
FIG. 18 is a cross-sectional view of FIG. 17 sectioned along a line H-H.
FIG. 19 is a schematic front view of an insulator according to still some embodiments of the present application.
FIG. 20 is a cross-sectional view of FIG. 19 sectioned along a line I-I.

Reference Numerals: 10. box; 11. first portion; 12. second portion; 20. battery cell; 21. electrode assembly; 22. shell; 221. end cap; 222. shell body; 2221. wall portion; 2222. first pressure relief region; 23. insulator; 231. second pressure relief region; 232. fragile region; 2321. fragile section; 2322. slot section; 2323. hole section; 233. first surface; 234. second surface; 235. slot; 236. filler; 237. exhaust slot; 238. through hole; 100. battery; 200. controller; 300. motor; 1000. vehicle.

### DETAILED DESCRIPTION OF EMBODIMENTS

To make the objectives, technical solutions, and advantages of embodiments of the present application clearer, the following gives a clear description of the technical solutions in the embodiments of the present application with reference to the accompanying drawings in the embodiments of the present application. Apparently, the described embodiments are merely a part of but not all of the embodiments of the present application. Based on the embodiments in the present application, all other embodiments obtained by a person of ordinary skill in the art without creative labor fall within the scope of protection of the present application.

Unless otherwise defined, all technical and scientific terms used in the present application have the same meanings as what is normally understood by a person skilled in the technical field of the present application. The terms used in the specification of the present application are merely intended to describe specific embodiments but not intended to limit the present application. The terms "include" and "contain" and any variations thereof used in the specification, claims, and brief description of accompanying drawings of the present application are intended as non-exclusive inclusion. The terms "first", "second", etc. in the specification and claims of the present application or in the accompanying drawings described above are used to distinguish between different objects, and are not used to describe a particular order or relationship of priority.

Reference to "embodiment" herein implies that particular features, structures, or characteristics described in conjunction with an embodiment may be included in at least one embodiment of the present application. Reference to this term in different places in the specification does not necessarily represent the same embodiment, nor does it represent an independent or alternative embodiment in a mutually exclusive relationship with other embodiments.

In the description of the present application, it is hereby noted that unless otherwise expressly specified and defined, the terms "mount", "connected", "connection", and "attach" are understood in a broad sense. For example, it may be a fixed connection, a detachable connection, or an integrated connection; or may be a direct connection or an indirect connection implemented through an intermediary; or may be internal communication between two components. To a person of ordinary skill in the art, the specific meaning of the above terms in the present application may be understood according to specific situations.

The term "and/or" in the present application indicates merely a relation for describing the related items, and represents three possible relationships. For example, A and/or B may represent the following three circumstances: A alone, both A and B, and B alone. In addition, the character "/" in the present application generally indicates an "or" relationship of the successively related items.

In the embodiments of the present application, the same reference numerals indicate the same components, and detailed descriptions of the same components are omitted in different embodiments for the sake of brevity. Understandably, dimensions, such as thickness, length, and width of various components in the embodiments of the present application shown in the accompanying drawings, and dimensions, such as overall thickness, length, and width of an integrated apparatus are merely illustrative descriptions, but do not constitute any limitation on the present application.

"A plurality of" referred to in the present application means two or more (including two).

In an embodiment of the present application, a battery cell may be a secondary battery. The secondary battery is a battery cell that is reusable through activation of an active material in the battery cell by charging the battery cell that is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. The specific type of the battery cell is not limited herein.

Generally, a battery cell includes an electrode assembly. The electrode assembly includes a positive electrode, a negative electrode, and a separator. During charge and discharge of the battery cell, active ions (such as lithium ions) are shuttled between the positive electrode and the negative electrode by intercalation and deintercalation. The separator is disposed between the positive electrode and the negative electrode, and serves to prevent a short circuit between the positive electrode and the negative electrode and allow passage of active ions.

In some embodiments, the positive electrode may be a positive electrode plate. The positive electrode plate may include a positive current collector and a positive active material disposed on at least one surface of the positive current collector.

As an example, the positive current collector includes two surfaces opposite to each other in a thickness direction of the current collector. The positive active material is disposed on any one or both of the two opposite surfaces of the positive current collector.

As an example, the positive current collector may be a metal foil or a composite current collector. For example, the metal foil may be made of aluminum or stainless steel with a silver finish, or stainless steel, copper, aluminum, nickel, carbon electrode, carbon, nickel, titanium, or the like. The composite current collector may include a polymer material substrate and a metal layer, and the composite current collector may be formed by overlaying the polymer material substrate (for example, polypropylene, polyethylene terephthalate, polybutylene terephthalate, polystyrene, or polyethylene) with a metal material (for example, aluminum, aluminum alloy, nickel, nickel alloy, titanium, titanium alloy, silver, and silver alloy).

As an example, the positive active material may include at least one of the following materials: a lithium-containing phosphate, a lithium transition metal oxide and respective modified compounds thereof. However, the present application is not limited to such materials, and other conventional materials usable as a positive active material of a battery may be used instead. Of such positive active materials, one may be used alone, or at least two may be used in combination. Examples of the lithium-containing phosphate may include, but without being limited to, at least one of lithium iron phosphate (such as LiFePO4 (briefly referred to as LFP)), a composite of lithium iron phosphate and carbon, lithium manganese phosphate (such as LiMnPO4), a composite of lithium manganese phosphate and carbon, lithium manganese iron phosphate, or a composite of lithium manganese iron phosphate and carbon.

In some embodiments, the positive electrode may be a foamed metal. The foamed metal may be foamed nickel, foamed copper, foamed aluminum, foamed alloy, foamed carbon, or the like. When the foamed metal is used as the positive electrode, a positive active material may be disposed on the surface of the foamed metal or not. As an example, the foamed metal may further be filled and/or deposited with a lithium source material, a potassium metal, or a sodium metal. The lithium source material is a lithium metal and/or a lithium-rich material.

In some embodiments, the negative electrode may be a negative electrode plate. The negative electrode plate may include a negative current collector.

As an example, the negative current collector may be a metal foil or a composite current collector. For example, the metal foil may be made of aluminum or stainless steel with a silver finish, or stainless steel, copper, aluminum, nickel, carbon electrode, carbon, nickel, titanium, or the like. The composite current collector may include a polymer material substrate and a metal layer, and the composite current collector may be formed by overlaying the polymer material substrate (for example, polypropylene, polyethylene terephthalate, polybutylene terephthalate, polystyrene, or polyethylene) with a metal material (for example, copper, copper alloy, nickel, nickel alloy, titanium, titanium alloy, silver, and silver alloy).

As an example, the negative electrode plate may include a negative current collector and a negative active material disposed on at least one surface of the negative current collector.

For example, the negative current collector includes two surfaces opposite to each other in a thickness direction thereof. The negative active material is disposed on either or both of the two opposite surfaces of the negative current collector.

As an example, the negative active material may be a negative active material known for use in a battery cell in the art. As an example, the negative active material may include at least one of the following materials: artificial graphite, natural graphite, soft carbon, hard carbon, silicon-based material, tin-based material, lithium titanium oxide, and the like.

In some embodiments, the negative electrode may be a foamed metal. The foamed metal may be foamed nickel, foamed copper, foamed aluminum, foamed alloy, foamed carbon, or the like. When the foamed metal is used as the negative electrode plate, a negative active material may be disposed on the surface of the foamed metal or not.

In some embodiments, the material of the positive current collector may be aluminum, and the material of the negative current collector may be copper.

In some embodiments, the electrode assembly further includes a separator. The separator is disposed between the positive electrode and the negative electrode.

In some embodiments, the separator is a separator film. The type of the separator film is not particularly limited in the present application, and may be any well-known separator with a porous structure that has good chemical stability and mechanical stability.

As an example, the separator may be mainly made of a material that is at least one selected from glass fiber, non-woven fabric, polyethylene, polypropylene, polyvinylidene difluoride, or ceramics.

In some embodiments, the separator is a solid-state electrolyte. The solid-state electrolyte is disposed between the positive electrode and the negative electrode, and serves to transmit ions and isolate the positive electrode from the negative electrode at the same time.

In some embodiments, the battery cell further includes an electrolyte. The electrolyte serves to conduct ions between the positive electrode and the negative electrode. The type of the electrolyte is not particularly limited in the present application, and may be selected as required. The electrolyte may be in a liquid state, gel state, or solid state.

In some embodiments, the electrode assembly is a jelly-roll structure. The positive electrode plate and the negative electrode plate are wound into a jelly-roll structure.

In some embodiments, the electrode assembly is a stacked structure.

As an example, a plurality of positive electrode plates and a plurality of negative electrode plates are disposed. The plurality of positive electrode plates and the plurality of negative electrode plates are stacked alternately.

As an example, a plurality of positive electrode plates may be disposed, and the negative electrode plate is folded to form a plurality of stacked fold sections. One positive electrode plate is sandwiched between adjacent fold sections.

As an example, both the positive electrode plate and the negative electrode plate are folded to form a plurality of stacked fold sections.

As an example, a plurality of separators may be disposed, and each of the separators may be disposed between any positive electrode plate and negative electrode plate that are adjacent to each other.

As an example, the separators may be disposed continuously, and each separator may be disposed in a folded or wound manner between any positive electrode plate and negative electrode plate that are adjacent to each other.

In some embodiments, the shape of the electrode assembly may be a cylindrical shape, a flat shape, a polygonal prism shape, or the like.

In some embodiments, a tab is disposed on the electrode assembly. The tab can lead current from the electrode assembly. The tab includes a positive tab and a negative tab.

In some embodiments, the battery cell may include a shell. The shell is configured to package components such as the electrode assembly and the electrolyte. The shell may be a steel shell, an aluminum shell, a plastic shell (for example, polypropylene), and a composite metal shell (for example, a copper-aluminum composite shell).

As an example, the battery cell may be a cylindrical battery cell, a prismatic battery cell, a pouch-type battery cell, or a battery cell in another shape. The prismatic battery cells include a square-shell battery cell, a blade battery cell, and a polygonal prism battery. An example of the polygonal prism battery is a hexagonal prism battery. The type of the battery cell is not particularly limited herein.

In some embodiments, the shell includes an end cap and a shell body, the shell body is provided with an opening, and the end cap closes the opening to form a closed space for accommodating substances such as an electrode assembly and an electrolyte. The shell body may be provided with one or more openings. One or more end caps may also be provided.

In some embodiments, at least one electrode terminal is disposed on the shell, and is electrically connected with a tab. The electrode terminal can be directly connected with the tab, or can be indirectly connected with the tab through an adapter component. The electrode terminal can be disposed on the end cap or on the shell body.

In some embodiments, a pressure relief mechanism is disposed on the shell. The pressure relief mechanism is configured to release internal pressure of the battery cell.

As an example, the pressure relief mechanism and the shell may be integrally formed.

As an example, the pressure relief mechanism and the shell may also be discretely disposed and connected to each other.

The battery mentioned in an embodiment of the present application means a unitary physical module that may include one or more battery cells to provide a higher voltage and a higher capacity. If there are a plurality of battery cells, the plurality of battery cells are connected in series, parallel, or series-and-parallel pattern by a busbar component.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or battery module is accommodated in the box.

During the development of battery technologies, it is necessary to consider various design factors, such as battery life, energy density, discharge capacity, charge and discharge rates, and other performance parameters. In addition, it is also necessary to consider the safety of the battery. However, the safety of current batteries is relatively poor.

For a battery cell, to ensure the safety of the battery cell, a pressure relief mechanism may be disposed on the battery cell. When the battery cell is under thermal runaway, the pressure relief mechanism is opened to relieve the internal pressure of the battery cell, so as to lower the risk of an explosion or a fire of the battery cell.

The inventor of the present application has noticed that a short circuit is prone to occur between the wall portion provided with the pressure relief mechanism and the electrode assembly.

After further research, the inventor has found that on a condition that the insulator is directly disposed between the wall portion and the electrode assembly, although the short circuit between the wall portion and the electrode assembly can be solved, the insulator may block the flow of gas to the wall portion, causing the failure to relieve pressure when the battery cell is under thermal runaway.

In view of this, embodiments of the present application provide a battery cell. The battery cell includes an electrode assembly, a shell and an insulator. The shell is configured to accommodate the electrode assembly, where the shell includes a wall portion, and the wall portion is provided with a first pressure relief region configured to be opened when the battery cell is under thermal runaway; and the insulator is at least partially disposed between the electrode assembly and the wall portion to dielectrically insulate the electrode assembly and the wall portion; where the insulator is provided with a second pressure relief region at a position corresponding to the first pressure relief region, and the second pressure relief region is configured to allow gas to reach the first pressure relief region through the insulator when the battery cell is under thermal runaway.

By disposing the insulator between the electrode assembly of the battery cell and the wall portion provided with the first pressure relief region, the wall portion and the electrode assembly can be dielectrically insulated, thereby improving the safety of the battery cell. The insulator is provided with the second pressure relief region corresponding to the first pressure relief region in position. When the battery cell is under thermal runaway, the second pressure relief region allows gas to be relieved of pressure from the first pressure relief region through the insulator, which ensures high safety.

The technical solutions described in the embodiments of the present application are applicable to a battery and to an electrical device that use a battery.

The electrical device may be a vehicle, a mobile phone, a portable device, a laptop, a ship, a spacecraft, an electric toy, a power tool, or the like. The spacecraft includes an airplane, a rocket, a space shuttle, a spaceship, and the like. The electric toy includes a stationary or mobile electric toy, such as a game console, an electric vehicle toy, an electric ship toy, and an electric aircraft toy. The power tool includes a metal cutting power tool, a grinding power tool, an assembly power tool, and a railway power tool, such as an electric drill, an electric grinder, an electric wrench, an electric screwdriver, an electric hammer, an impact electric drill, a concrete vibrator, and an electric planer. The embodiments of the present application do not make special restrictions on the foregoing electrical device.

For ease of description, the electrical device being a vehicle 1000 is used as an example for description in the following embodiments.

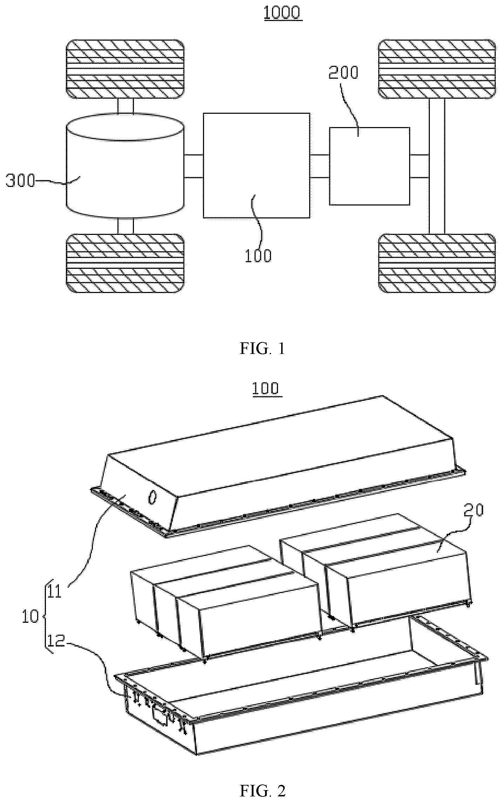

Referring to FIG. 1, FIG. 1 is a schematic structural diagram of a vehicle 1000 according to some embodiments of the present application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet the working power requirements of the vehicle 1000 in start, navigation and running.

In some embodiments of the present application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

Referring to FIG. 2: FIG. 2 is an exploded view of a battery 100 according to some embodiments of the present application. The battery 100 includes a box 10 and a battery cell 20. The battery cell 20 is accommodated in the box 10. The box 10 is configured to provide an accommodation space for the battery cell 20, and the box 10 may assume various structures. In some embodiments, the box 10 may include a first portion 11 and a second portion 12. The first portion 11 and the second portion 12 fit and cover each other. The first portion 11 and the second portion 12 jointly define the accommodation space for accommodating the battery cell 20. The second portion 12 may be of a hollow structure opened at one end. The first portion 11 may be of a plate-like structure. The first portion 11 fits and covers an opened side of the second portion 12, such that the first portion 11 and the second portion 12 jointly define the accommodation space. The first portion 11 and the second portion 12 may further be each of a hollow structure opened at one end. An opened side of the first portion 11 fits and covers the opening side of the second portion 12. Certainly, the box 10 formed by the first portion 11 and the second portion 12 may be in various shapes, such as a cylinder and a cuboid.

In the battery 100, there may be a plurality of battery cells 20. The plurality of battery cells 20 may be connected in series or in parallel or in series-and-parallel pattern, and "series-and-parallel pattern" means that there are both series and parallel connections in the plurality of battery cells 20. The plurality of battery cells 20 can be directly connected in series, in parallel, or in series-and-parallel pattern, and then a whole formed by the plurality of battery cells 20 is accommodated in the box 10. Certainly, in the battery 100, the plurality of battery cells 20 may first be connected in series or in parallel or in series-and-parallel pattern to form battery modules, and then a plurality of battery modules are connected in series or in parallel or in series-and-parallel pattern to form a whole that is accommodated in the box 10. The battery 100 may also include other structures, for example, the battery 100 may also include a busbar component for realizing an electrical connection between the plurality of battery cells 20.

Each battery cell 20 may be a secondary battery cell or a primary battery cell, and may also be a lithium-sulfur battery cell, a sodium-ion battery cell, or a magnesium-ion battery cell, but is not limited thereto. The battery cells 20 may be in a cylindrical shape, a flat shape, a cuboid shape, or another shape.

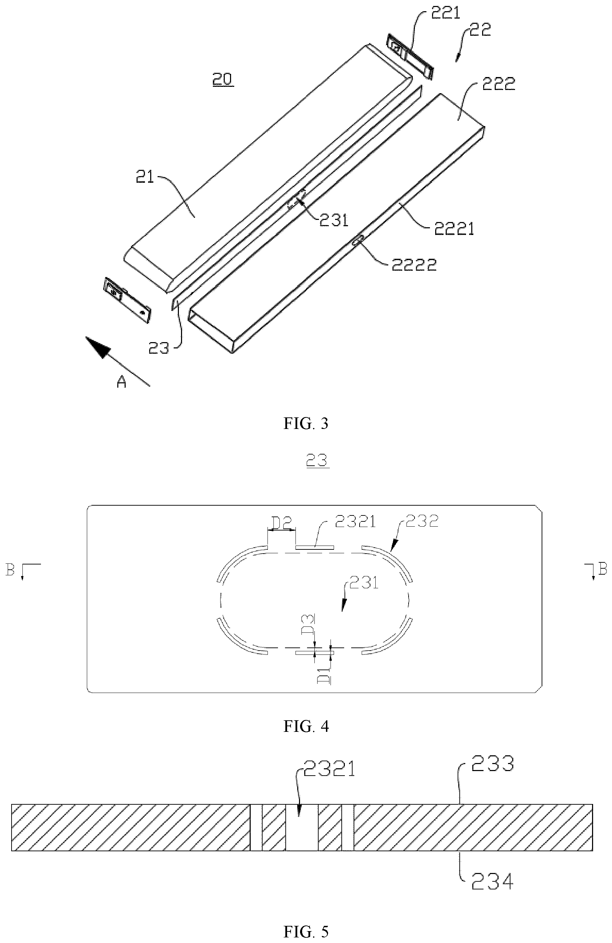

Referring to FIG. 3: FIG. 3 is an exploded view of a battery cell 20 provided according to some embodiments of the present application. The battery cell 20 is a minimum unit that makes up a battery 100. As shown in FIG. 3, the battery cell 20 includes an electrode assembly 21, a shell 22, and other functional components. The shell 22 includes an end cap 221 and a shell body 222, and the end cap 221 is connected to the shell body 222.

The end cap 221 refers to a component that fits and covers an opening of the shell body 222 to isolate an internal environment of the battery cell 20 from an external environment. Not restrictively, the shape of the end cap 221 may be adapted to the shape of the shell body 222 to fit the shell body 222. Optionally, the end cap 221 may be made of a material (e.g., aluminum alloy) having a certain degree of hardness and strength. In this way, the end cap 221 is less prone to deform when subjected to extrusion and collision, allowing the battery cell 20 to have higher structural strength and improved safety performance. The end cap 221 may be provided with functional components such as an electrode terminal. The electrode terminal may be configured to be electrically connected with the electrode assembly 21 to output or input electrical energy of the battery cell 20. The end cap 221 may also be made of a variety of materials such as copper, iron, aluminum, stainless steel, aluminum alloy, or plastic, and the materials are not particularly limited in embodiments of the present application.

The shell body 222 is an assembly configured to fit the end cap 221 to form the internal environment of the battery cell 20. The formed internal environment may be configured to accommodate an electrode assembly 21, an electrolyte solution, and other components. The shell body 222 and the end cap 221 may be stand-alone components. The opening may be disposed on the shell body 222. At the opening, the end cap 221 fits and covers the opening to form the internal environment of the battery cell 20. Not restrictively, the end cap 221 and the shell body 222 may be integrated. Specifically, the end cap 221 and the shell body 222 may form a common connecting face before other components are put into the shell. Subsequently, when an interior of the shell body 222 needs to be sealed, the end cap 221 is made to fit and cover the shell body 222. The shell body 222 may be in various sizes and shapes such as a cuboid, a cylinder, or a hexagonal prism. Specifically, the shape of the shell body 222 may be determined depending on the specific shape and size of the electrode assembly 21. The shell body 222 may be made of a variety of materials, such as copper, iron, aluminum, stainless steel, aluminum alloy, or plastic, which are not particularly limited in these embodiments of the present application.

Referring to FIG. 3, FIG. 4 and FIG. 5: FIG. 4 is a schematic front view of an insulator 23 provided according to some embodiments of the present application; and FIG. 5 is a cross-sectional view of FIG. 4 sectioned along a line B-B. Embodiments of the present application provide a battery cell 20. The battery cell 20 includes an electrode assembly 21, a shell 22 and an insulator 23. The shell 22 is configured to accommodate the electrode assembly 21, where the shell 22 includes a wall portion 2221, and the wall portion 2221 is provided with a first pressure relief region 2222 configured to be opened when the battery cell 20 is under thermal runaway; and the insulator 23 is at least partially disposed between the electrode assembly 21 and the wall portion 2221 to dielectrically insulate the electrode assembly 21 and the wall portion 2221; where the insulator 23 is provided with a second pressure relief region 231 at a position corresponding to the first pressure relief region 2222, and the second pressure relief region 231 is configured to allow gas to reach the first pressure relief region 2222 through the insulator 23 when the battery cell 20 is under thermal runaway.

It should be noted that the dotted line in FIG. 4 represents the range of the projection of the first pressure relief region 2222 on the insulator 23 in the first direction.

The first pressure relief region 2222 can be opened when the battery cell 20 is under thermal runaway to relieve the pressure inside the battery cell 20, thereby reducing the risk of an explosion or a fire of the battery cell 20. Thermal runaway of the battery cell 20 means that the internal pressure or temperature of the battery cell 20 meets burst pressure.

"The wall portion 2221 is provided with the first pressure relief region 2222" includes that the first pressure relief region 2222 is directly disposed on the wall portion 2221, and also includes that the first pressure relief region 2222 is indirectly disposed on the wall portion 2221. For example, when the wall portion 2221 is provided with a certain intermediate component, and the first pressure relief region 2222 is located on the certain intermediate component, that is, the first pressure relief region 2222 is indirectly disposed on the wall portion 2221.

The shell 22 includes a plurality of walls, such as a bottom wall, a side wall, and a top wall. The wall portion 2221 refers to a wall provided with the first pressure relief region 2222. For example, if the first pressure relief region 2222 is disposed on the bottom wall, the wall portion 2221 refers to the bottom wall of the shell 22. For another example, if the first pressure relief region 2222 is disposed on the top wall, the wall portion 2221 refers to the top wall of the shell 22. For another example, if the first pressure relief region 2222 is disposed on the side wall, the wall portion 2221 refers to the side wall of the shell 22. For another example, if the first pressure relief region 2222 is disposed on the end cap 221, the wall portion 2221 may also refer to the end cap 221.

The insulator 23 is a component made of an insulation material and having insulating properties. The insulation material includes but is not limited to plastic or rubber. The insulator 23 is configured to insulate the electrode assembly 21 and the wall portion 2221 from each other to prevent the situation that a short circuit of the battery cell 20 is caused due to electric connection between the electrode assembly 21 and the wall portion 2221. The insulator 23 may be entirely located between the electrode assembly 21 and the wall portion 2221, or may be partially located between the electrode assembly 21 and the wall portion 2221.

The second pressure relief region 231 allows gas in the battery cell 20 to be discharged from the first pressure relief region 2222 through the insulator 23 when the battery cell 20 is under thermal runaway, thereby relieving pressure.

By disposing the insulator 23 between the electrode assembly 21 of the battery cell 20 and the wall portion 2221 provided with the first pressure relief region 2222, the wall portion 2221 and the electrode assembly 21 can be dielectrically insulated, thereby improving the safety of the battery cell 20. The insulator 23 is provided with the second pressure relief region 231 corresponding to the first pressure relief region 2222 in position. When the battery cell 20 is under thermal runaway, the second pressure relief region 231 allows gas to be relieved of pressure from the first pressure relief region 2222 through the insulator 23, which ensures high safety.

In some embodiments, the second pressure relief region 231 is configured to be opened when the battery cell 20 is under thermal runaway.

When the battery cell 20 is in normal use, the second pressure relief region 231 separates the electrode assembly 21 and the first pressure relief region 2222. Even if the battery cell 20 is subjected to vibration, an electrolyte solution in the shell 22 is less prone to wash against the first pressure relief region 2222, and therefore, burst pressure of the first pressure relief region 2222 is not affected. In some embodiments, the wall portion 2221 is provided with a pressure relief slot, and the first pressure relief region 2222 is configured to be opened along the pressure relief slot when the battery cell 20 is under thermal runaway. In the first direction, the insulator 23 and the wall portion 2221 are disposed opposite to each other, and the projection of the insulator 23 covers the pressure relief slot.

The first direction is the direction in which the wall portion 2221 on the shell 22 provided with the first pressure relief region 2222 points toward the electrode assembly 21 along an axis perpendicular to the same. Referring to FIG. 4, the first direction may be the direction A as shown in the figure.

The pressure relief slot may be disposed on the surface of the wall portion 2221 facing towards the insulator 23, or may be disposed on the surface of the wall portion 2221 facing away from the insulator 23. Taking the wall portion 2221 being a rectangular flat plate structure as an example, the wall portion 2221 has a third surface and a fourth surface opposite to each other in the first direction, the third surface faces towards the insulator 23, and the fourth surface faces away from the insulator 23. The pressure relief slot may be disposed on the third surface of the wall portion 2221, or may be disposed on the fourth surface of the wall portion 2221.

The pressure relief slot is at a relatively fragile position on the wall portion 2221. When the battery cell 20 is under thermal runaway, the first pressure relief region 2222 is opened along the pressure relief slot. By making the projection of the insulator 23 in the first direction cover the pressure relief slot, the electrolyte solution is less prone to wash against the first pressure relief region, and therefore, burst pressure of the first pressure relief region 2222 is not affected.

In some embodiments, in the first direction, a projection of the second pressure relief region 231 covers a projection of the first pressure relief region 2222.

"The projection of the second pressure relief region 231 covers the projection of the first pressure relief region 2222" can also be understood as the position of the second pressure relief region 231 corresponding to the position of the first pressure relief region 2222, and the area of the second pressure relief region 231 being greater than or equal to the area of the first pressure relief region 2222.

An external force applied to the first pressure relief region 2222 when the electrolyte solution washes against the first pressure relief region 2222 may cause the first pressure relief region 2222 to burst open from the pressure relief slot and be separated from the wall portion 2221. By making the projection of the second pressure relief region 231 in the first direction cover the projection of the first pressure relief region 2222, the electrolyte solution is less prone to wash against the first pressure relief region 2222, and therefore, burst pressure of the first pressure relief region 2222 is not affected.

In some embodiments, in the first direction, a projection of the second pressure relief region 231 covers the pressure relief slot.

In the first direction, the projection of the second pressure relief region 231 may cover only the pressure relief slot, or may cover both the pressure relief slot and the first pressure relief region 2222. In an embodiment where the second pressure relief region 231 covers both the pressure relief slot and the first pressure relief region 2222, the area of the second pressure relief region 231 is greater than or equal to the area of the first pressure relief region 2222.

The projection of the second pressure relief region 231 in the first direction covers the pressure relief slot. When the battery cell 20 is in normal use, the second pressure relief region 231 can block the electrolyte solution to reduce the risk that the electrolyte solution washes against the pressure relief slot. When the battery cell 20 is under thermal runaway, the second pressure relief region 231 is opened to allow gas to reach the pressure relief slot more quickly, and make a bottom wall of the pressure relief slot burst open in time. In this way, the pressure can be relieved quickly, thereby improving the safety of the battery cell 20.

Referring to FIG. 4 and FIG. 5, in some embodiments, the insulator 23 is provided with the fragile region 232, and the fragile region 232 is disposed along the edge of the second pressure relief region 231.

The fragile region 232 may be formed by making an indentation or a slot on the insulator 23 and thinning the same. The strength at the position of the fragile region 232 is relatively low, so that it can burst open under the action of gas when the battery cell 20 is under thermal runaway.

By disposing a fragile region 232 on the insulator 23, the second pressure relief region 231 can be easily opened from the fragile region 232 when the battery cell 20 is under thermal runaway. Since the fragile region 232 is disposed along the edge of the second pressure relief region 231, when the battery cell 20 is under thermal runaway, the second pressure relief region 231 is opened along the edge to provide a larger opening for gas to pass through.

In some embodiments, the fragile region 232 is disposed around an outer side of a projection of the first pressure relief region 2222 on the insulator 23 in the first direction.

"The fragile region 232 is disposed around an outer side of a projection of the first pressure relief region 2222 on the insulator 23 in the first direction" may also be understood as the fragile region 232 being disposed around the outer side of the first pressure relief region 2222. Or in the first direction, the first pressure relief region 2222 is located within the range of the projection of the fragile region 232 on the wall portion 2221.

Since the fragile region 232 is disposed along the edge of the second pressure relief region 231, and disposed around the outer side of the projection of the first pressure relief region 2222 on the insulator 23 in the first direction, a range of the second pressure relief region 231 is greater than a range of the first pressure relief region 2222. In other words, in the first direction, the projection of the second pressure relief region 231 on the wall portion 2221 covers the first pressure relief region 2222. In this way, when the battery cell 20 is under thermal runaway, an area of an opening formed when the second pressure relief region 231 is opened is greater than an area of the first pressure relief region 2222, which is conducive to smooth pressure relief.

In some other embodiments, in the first direction, the projection of the fragile region 232 on the wall portion 2221 is located within the first pressure relief region 2222. At this time, the area of the opening formed when the second pressure relief region 231 is opened is smaller than or equal to the area of the first pressure relief region 2222.

In some embodiments, the pressure relief slot is formed on the wall portion 2221 and is disposed along an edge of the first pressure relief region 2222. The fragile region 232 is disposed around an outer side of a projection of the pressure relief slot on the insulator 23 in the first direction.

The pressure relief slot may be a slot body recessed from the surface of the wall portion 2221 in the first direction, and the first pressure relief region 2222 is a portion defined by the inner side face of the slot body. Taking the inner side face of the pressure relief slot being rectangular as an example, the first pressure relief region 2222 is a rectangular portion of the wall portion 2221 defined by the inner side face of the pressure relief slot. The pressure relief slot may also be a linear slot extending along a bending trajectory. For example, if the bending trajectory is a U-shaped trajectory, the first pressure relief region 2222 is a U-shaped portion of the wall portion 2221 defined by the bending trajectory. For another example, if the bending trajectory is a rectangular trajectory, the first pressure relief region 2222 is a rectangular portion of the wall portion 2221 defined by the bending trajectory. If the pressure relief slot is a linear slot extending along the bending trajectory, once the pressure inside the battery cell 20 reaches the burst pressure, the first pressure relief region 2222 may be opened with the pressure relief slot as a boundary, so as to relieve the pressure inside the battery cell 20.

"The fragile region 232 is disposed around an outer side of a projection of the pressure relief slot on the insulator 23 in the first direction" may also be understood as the fragile region 232 being disposed around the outer side of the pressure relief slot. Or in the first direction, the pressure relief slot is located within the range defined by the projection of the fragile region 232 on the wall portion 2221.

By disposing a pressure relief slot on the wall portion 2221, a fragile position is formed so that the first pressure relief region 2222 can be easily opened from the fragile position when the battery cell 20 is under thermal runaway. Since the pressure relief slot is disposed along the edge of the first pressure relief region 2222, when the battery cell 20 is under thermal runaway, the first pressure relief region 2222 is opened along the edge to provide a larger opening for gas to pass through.

In some other embodiments, the battery cell 20 includes a pressure relief part, a pressure relief hole is formed on the wall portion 2221, and the pressure relief part covers the pressure relief hole. The pressure relief slot is formed on the pressure relief part. The fragile region 232 is disposed around an outer side of a projection of the pressure relief slot on the insulator 23 in the first direction.

The pressure relief part may be of a flake-shaped structure, and the pressure relief part may be welded to the wall portion 2221 to cover the pressure relief hole. The pressure relief slot is disposed on the pressure relief part.

"The fragile region 232 is disposed around an outer side of a projection of the pressure relief slot on the insulator 23 in the first direction" may also be understood as the fragile region 232 being disposed around the outer side of the pressure relief slot. Or in the first direction, the pressure relief slot is located within the range defined by the projection of the fragile region 232 on the wall portion 2221.

By disposing the pressure relief slot on the pressure relief part, a fragile position is formed so that the first pressure relief region 2222 can be easily opened from the fragile position when the battery cell 20 is under thermal runaway.

Optionally, the pressure relief slot is disposed along the edge of the first pressure relief region 2222, so that the first pressure relief region 2222 can be opened along the edge to provide a larger opening for gas to pass through.

In some embodiments, the fragile region 232 is disposed around an outer side of the projection of the first pressure relief hole on the insulator 23 in the first direction.

"The fragile region 232 is disposed around an outer side of a projection of the pressure relief hole on the insulator 23 in the first direction" may also be understood as the fragile region 232 being disposed around the outer side of the pressure relief hole. Or in the first direction, the pressure relief hole is located within the range defined by the projection of the fragile region 232 on the wall portion 2221.

By disposing the fragile region 232 around the outer side of the projection of the pressure relief hole on the insulator 23 in the first direction, if the fragile region 232 penetrates through the insulator 23, when the battery cell 20 is in normal use, instead of flowing directly to the pressure relief part after passing through the fragile region 232, the electrolyte solution first collides with the wall portion 2221 to change the flow direction, and then flows to the pressure relief part after impact force is reduced, so that the pressure relief part is less prone to be washed against by the electrolyte solution. In addition, when the battery cell 20 is under thermal runaway, an open area of the second pressure relief region 231 is greater than the area of the pressure relief hole, which is conducive to smooth pressure relief.

Referring to FIG. 4 and FIG. 5, in some embodiments, the fragile region 232 includes a plurality of fragile sections 2321, and the plurality of fragile sections 2321 are disposed at intervals in the circumferential direction of the second pressure relief region 231.

A fragile section 2321 is part of a fragile region 232. A plurality of fragile sections 2321 together form a fragile region 232. "A plurality of fragile sections 2321 are disposed at intervals in the circumferential direction of the second pressure relief region 231" can also be understood as the plurality of fragile sections 2321 being disposed at intervals in the circumferential direction of the first pressure relief region 2222.

By disposing a plurality of fragile sections 2321, when the battery cell 20 is under thermal runaway, the second pressure relief region 231 can be opened from the position where the plurality of fragile sections 2321 are located, so that gas is relieved of pressure from the first pressure relief region 2222 through the insulator 23. Since the plurality of fragile sections 2321 are disposed at intervals in the circumferential direction of the second pressure relief region 231, the part between two adjacent fragile sections 2321 serves as a reinforcing rib, so that the strength of the second pressure relief region 231 is high, and even if the battery cell 20 is subjected to large vibration, the second pressure relief region 231 is unlikely to be opened by mistake.

Referring to FIG. 4 and FIG. 5, in some embodiments, a fragile section 2321 is in a shape of a strip, and a width of the fragile section 2321 is D1 which satisfies: D1 ≤ 2 mm.

The fragile section 2321 extends in the circumferential direction of the second pressure relief region 231, and the extending direction of the fragile section 2321 is also a length direction thereof. D1 represents a width of the fragile section 2321. The widths of the plurality of fragile sections 2321 may be the same or different, but are all less than or equal to 2 mm. In this embodiment, the widths of the plurality of fragile sections 2321 are the same. Values of the width of the fragile section 2321 can be: D1 = 2 mm, 1.8 mm, 1.5 mm, 1.2 mm, 1 mm, 0.8 mm, 0.5 mm, etc.

The width of the fragile section 2321 is less than 2 mm, which actually also defines the width of the remaining part between two adjacent fragile sections 2321. The smaller the width of this part, the easier it is to open the second pressure relief region 231 when the battery cell 20 is under thermal runaway. If D1 > 2 mm, the width of the remaining part between two adjacent fragile sections 2321 is also greater than 2 mm. As a result, such large width of this part causes the failure to open the second pressure relief region 231 in time when the battery cell 20 is under thermal runaway, and the failure to relieve pressure of the battery cell 20 in time.

Referring to FIG. 4 and FIG. 5, in some embodiments, in the circumferential direction of the second pressure relief region 231, the distance between two adjacent fragile sections 2321 is D2 which satisfies: D2 ≤ 10 mm.

In the circumferential direction of the second pressure relief region 231, the plurality of fragile sections 2321 may be disposed at equal intervals or may be disposed not at equal intervals, but the distance between two adjacent fragile sections 2321 is less than or equal to 10 mm. In this embodiment, in the circumferential direction of the second pressure relief region 231, a plurality of fragile sections 2321 are disposed at equal intervals. In the circumferential direction of the second pressure relief region 231, values of the distance between two adjacent fragile sections 2321 may be: D2 = 10 mm, 9.5 mm, 9 mm, 8.5 mm, 8 mm, 7.5 mm, 6 mm, 5 mm, 4 mm, 3 mm, etc.

When there is an arc-shaped fragile section 2321 in two adjacent fragile sections 2321, in the circumferential direction of the second pressure relief region 231, the distance between the two adjacent fragile sections 2321 refers to the shortest linear distance between an end face of the first fragile section 2321 close to the second fragile section 2321 and an end face of the second fragile section 2321 close to the first fragile section 2321.

The distance between two adjacent fragile sections 2321 is also the length of the remaining part between two adjacent fragile sections 2321. The smaller the length of this part, the easier it is to open the second pressure relief region 231 when the battery cell 20 is under thermal runaway. If D2 > 10 mm, the length of the remaining part between two adjacent fragile sections 2321 is also greater than 10 mm. As a result, such large length of this part causes the failure to open the second pressure relief region 231 in time when the battery cell 20 is under thermal runaway, and the failure to relieve pressure of the battery cell 20 in time.

Referring to FIG. 4 and FIG. 5, in some embodiments, in a direction perpendicular to the first direction, a distance between the fragile region 232 and the first pressure relief region 2222 is D3 which satisfies: D3 ≤ 3 mm.

The distance between the fragile region 232 and the first pressure relief region 2222 may be different at different positions, and the distance between the fragile region 232 and the first pressure relief region 2222 may be the same at different positions. However, in a direction perpendicular to the first direction, the distance between the fragile region 232 and the first pressure relief region 2222 is less than or equal to 3 mm. In a direction perpendicular to the first direction, values of the distance between the fragile region 232 and the first pressure relief region 2222 may be: D3 = 3 mm, 2.8 mm, 2.5 mm, 2.2 mm, 2 mm, 1.8 mm, 1.5 mm, 1 mm, etc.

By limiting the distance between the fragile region 232 and the first pressure relief region 2222 in the direction perpendicular to the first direction, the area relationship between the second pressure relief region 231 and the first pressure relief region 2222 is actually limited. The area of the second pressure relief region 231 is greater than the area of the first pressure relief region 2222, but the area of the second pressure relief region 231 should not be too large, otherwise when the second pressure relief region 231 is opened, the second pressure relief region 231 is separated from the insulator 23, and a separated part may fall towards the first pressure relief region 2222 and thus block the first pressure relief region 2222, which affects the pressure relief in the first pressure relief region 2222.

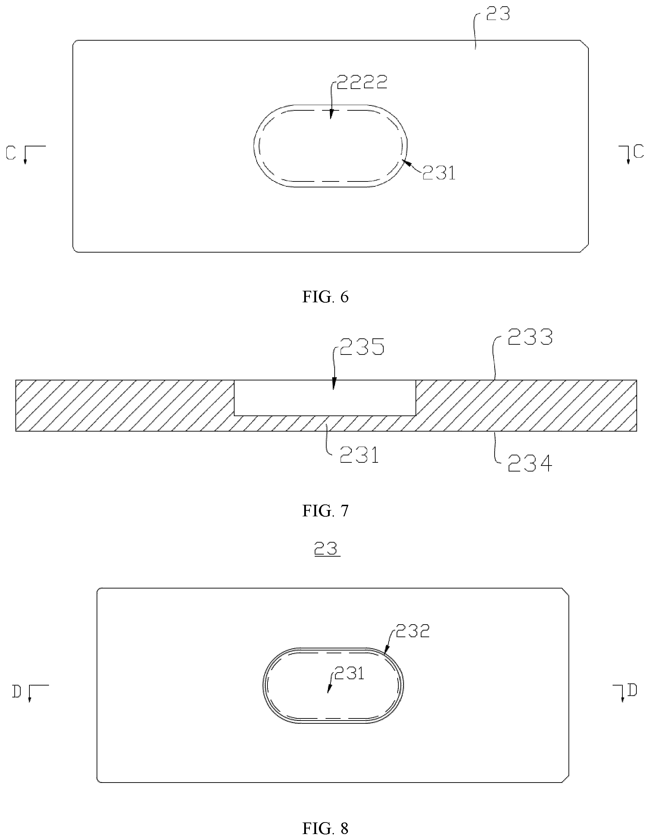

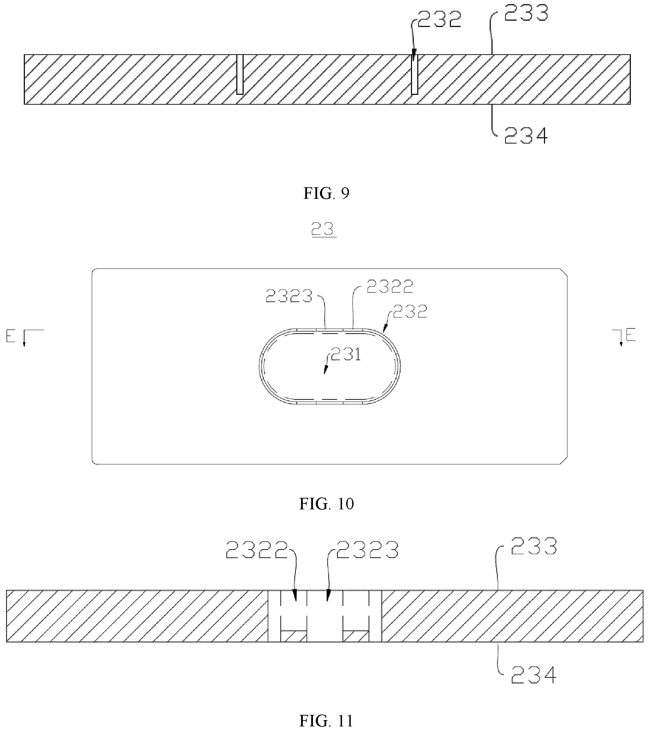

Referring to FIG. 8 and FIG. 9: FIG. 8 is a schematic front view of an insulator 23 according to still other embodiments of the present application; and FIG. 9 is a cross-sectional view of FIG. 8 sectioned along a line D-D. In still other embodiments, the fragile region 232 is a closed structure extending along a closed trajectory.

It should be noted that the dotted line in FIG. 8 represents the range of the projection of the first pressure relief region 2222 on the insulator 23 in the first direction.

The closed trajectory is a trajectory with a head end and a tail end connected to each other, such as a rectangular trajectory, and an oval trajectory. The shape of the fragile region 232 is the same as the shape of the closed trajectory.

The fragile region 232 is disposed along the edge of the second pressure relief region 231 in the circumferential direction. In this way, when the battery cell 20 is under thermal runaway, the second pressure relief region 231 can be easily opened.

In some embodiments, the insulator 23 is provided with an indentation, a slot or a through hole to form the fragile region 232.

The indentation or the slot may be disposed on the surface of the insulator 23 facing towards the wall portion 2221, or may be disposed on the surface of the insulator 23 facing away from the wall portion 2221. Taking the insulator 23 being a rectangular flat plate structure as an example, the insulator 23 is provided with a first surface 233 and a second surface 234 opposite to each other in the first direction, where the first surface 233 faces towards the wall portion 2221, and the second surface 234 faces away from the wall portion 2221. The indentation or the slot may be disposed on the first surface 233 of the insulator 23, or may be disposed on the second surface 234 of the insulator 23.

The indentation may be a slot body recessed from the surface of the insulator 23 in the first direction, and the second pressure relief region 231 may be a portion defined by the inner side face of the slot body. Alternatively, part of the indentation may penetrate through the first surface 233 and the second surface 234 of the insulator 23 to form a through hole. Taking the inner side face of the indentation being rectangular as an example, the second pressure relief region 231 is a rectangular portion of the insulator 23 defined by the inner side face of the indentation. The indentation may also be a linear slot extending along a bending trajectory. For example, if the bending trajectory is a U-shaped trajectory, the second pressure relief region 231 is a U-shaped portion of the insulator 23 defined by the bending trajectory. For another example, if the bending trajectory is a rectangular trajectory, the second pressure relief region 231 is a rectangular portion of the insulator 23 defined by the bending trajectory. If the indentation is a linear slot extending along the bending trajectory, when the pressure inside the battery cell 20 reaches the burst pressure, the second pressure relief region 231 may be opened with the indentation as a boundary, so as to relieve the pressure inside the battery cell 20.

The shape of the indentation, the slot or the through hole is not limited herein. For example, the indentation, the slot or the through hole can be in a circular shape, an arc shape or a sectorial shape.

By forming an indentation or a slot on the insulator 23, the insulator 23 is thinned to form a fragile position, which makes it convenient to burst out when the battery cell 20 is under thermal runaway. By forming a plurality of through holes on the insulator 23, a region between two adjacent through holes is easily breakable, which makes it convenient to burst out when the battery cell 20 is under thermal runaway.

In some embodiments, the melting point of the fragile region 232 is lower than the melting point of the insulator 23.

When the battery cell 20 is under thermal runaway, the temperature of gas is high, and the high-temperature gas will melt the fragile region 232, so that the second pressure relief region 231 is opened, thereby allowing gas to reach the first pressure relief region 2222 through the insulator 23.

In some other embodiments, the insulator 23 is provided with an indentation, a slot or a through hole. The indentation, the slot or the through hole is filled with a filler 236, and a melting point of the filler 236 is lower than a melting point of the insulator 23.

The filler 236 can be filled in part of the indentation, the slot 235, or the through hole, or can be filled in the entire indentation, slot 235 or through hole.

By forming an indentation or a slot on the insulator 23, the insulator 23 is thinned to form a fragile position, which makes it convenient to burst out when the battery cell 20 is under thermal runaway. By forming a plurality of through holes on the insulator 23, a region between two adjacent through holes is easily breakable, which makes it convenient to burst out when the battery cell 20 is under thermal runaway. The insulator 23 is filled in the indentation, the slot or the through hole, so that the electrolyte solution is less prone to enter the indentation or the slot, or the electrolyte solution is less prone to flow to the wall portion through the through hole. In this way, the electrolyte solution in the battery cell 20 can infiltrate the electrode assembly, which avoids the waste of the electrolyte solution.

In some embodiments, the insulator 23 is provided with an indentation or a slot to form the fragile region 232, the insulator 23 is provided with a first surface 233 facing towards the wall portion 2221, and the indentation or the slot is disposed on the first surface 233.

The first surface 233 is the surface of the insulator 23 facing towards the wall portion 2221 in the first direction, i.e., the surface of the insulator 23 facing away from the electrode assembly 21 in the first direction. The indentation or the slot is disposed on the first surface 233 and recessed towards the second surface 234.

By disposing an indentation or a slot on the first surface 233, the electrolyte solution is less prone to enter the indentation or the slot, and the electrolyte solution in the battery cell 20 can infiltrate the electrode assembly 21, which avoids the waste of the electrolyte solution.

Referring to FIG. 10 and FIG. 11: FIG. 10 is a schematic front view of an insulator 23 provided according to yet other embodiments of the present application; and FIG. 11 is a cross-sectional view of FIG. 10 sectioned along a line E-E. In yet other embodiments of the present application, the fragile region 232 includes a plurality of slot sections 2322 and a plurality of hole sections 2323. In the circumferential direction of the second pressure relief region 231, the slot sections 2322 and the hole sections 2323 are disposed alternately. In the first direction, the insulator 23 is provided with a first surface 233 and a second surface 234 opposite to each other. The slot sections 2322 are recessed from the first surface 233 towards the second surface 234, and the hole sections 2323 penetrate through the first surface 233 and the second surface 234.

It should be noted that the dotted line in FIG. 10 represents the range of the projection of the first pressure relief region 2222 on the insulator 23 in the first direction. The dotted line in FIG. 11 is merely intended for ease of showing the position of the slot section 2322, but does not necessarily represent a solid structure.

In the circumferential direction of the second pressure relief region 231, there is one hole section 2323 disposed between every two adjacent slots sections 2322, and there is one slot section 2322 disposed between every two adjacent hole sections 2323. The slot section 2322 is a slot structure that runs through the first surface 233 of the insulator 23 and does not run through the second surface 234 of the insulator 23. The hole section 2323 is a hole structure that runs through the first surface 233 and the second surface 234 of the insulator 23.

The depth of the slot section 2322 is different from the depth of the hole section 2323. The hole section 2323 runs through the first surface 233 and the second surface 234, so the depth is larger. The slot section 2322 is recessed from the first surface 233 towards the second surface 234, so the depth is smaller. By disposing the plurality of slot sections 2322 and the plurality of hole sections 2323 at intervals in the circumferential direction of the second pressure relief region 231, when the battery cell 20 is under thermal runaway, the second pressure relief region 231 can be easily opened.

Referring to FIG. 6 and FIG. 7: FIG. 6 is a schematic front view of an insulator 23 provided according to some other embodiments of the present application; and FIG. 7 is a cross-sectional view of FIG. 6 sectioned along a line C-C. In some other embodiments, the insulator 23 is provided with a slot 235, and the bottom wall of the slot 235 is formed into the second pressure relief region 231.

It should be noted that the dotted line in FIG. 6 represents the range of the projection of the first pressure relief region 2222 on the insulator 23 in the first direction.

When the battery cell 20 is in normal use, the bottom wall of the slot 235 separates the electrode assembly 21 and the first pressure relief region 2222. Even if the battery cell 20 is subjected to vibration, an electrolyte solution in the shell 22 is less prone to wash against the first pressure relief region 2222, and therefore, burst pressure of the first pressure relief region 2222 is not affected. When the battery cell 20 is under thermal runaway, the bottom wall of the slot 235 is opened, thereby allowing gas to be relieved of pressure from the first pressure relief region 2222 through the insulator 23, which ensures high safety.

In some embodiments, the melting point of the second pressure relief region 231 is lower than the melting point of the insulator 23.

The insulator 23 is provided with a through hole 238 running through the first surface 233 and the second surface 234 of the insulator 23. The second pressure relief region 231 is disposed in the through hole 238 and connected with the insulator 23.

During production, the insulator 23 with a through hole 238 can be injection molded first through a mold, and the second pressure relief region 231 is injected inside the through hole 238.

When the battery cell 20 is in normal use, the second pressure relief region 231 separates the electrode assembly 21 and the first pressure relief region 2222. Even if the battery cell 20 is subjected to vibration, an electrolyte solution in the shell 22 is less prone to wash against the first pressure relief region 2222, and therefore, burst pressure of the first pressure relief region 2222 is not affected. When the battery cell 20 is under thermal runaway, the temperature of gas is high, and the high-temperature gas will melt the second pressure relief region 231, thereby allowing gas to be relieved of pressure from the first pressure relief region 2222 through the insulator 23, which ensures high safety.

In some embodiments, the melting point of the second pressure relief region 231 is M which satisfies: 80°C ≤ M ≤ 180°C.

Values of the melting point of the second pressure relief region 231 may be: M = 80°C, 85°C, 90°C, 95°C, 100°C, 105°C, 110°C, 115°C, 120°C, 125°C, 130°C, 135°C, 140°C, 145°C, 150°C, 155°C, 160°C, 165°C, 170°C, 175°C, 180°C, etc.

A material with a melting point of 80°C to 180°C is selected as the second pressure relief region 231, which can not only ensure that the second pressure relief region 231 can be melted by high-temperature gas when the battery cell 20 is under thermal runaway, but also reduce the risk that the second pressure relief region 231 is melted during normal operation of the battery cell 20. When M < 80°C, the second pressure relief region 231 may be melted under a normal operating temperature of the battery cell 20, causing the electrolyte solution to wash against the first pressure relief region 2222 and thus affect the burst pressure of the first pressure relief region 2222. When M > 180°C, the second pressure relief region 231 has a high melting point and is not easy to melt under the action of high-temperature gas, and as a result, the pressure of the battery cell 20 cannot be relieved or cannot be relieved in a timely manner.

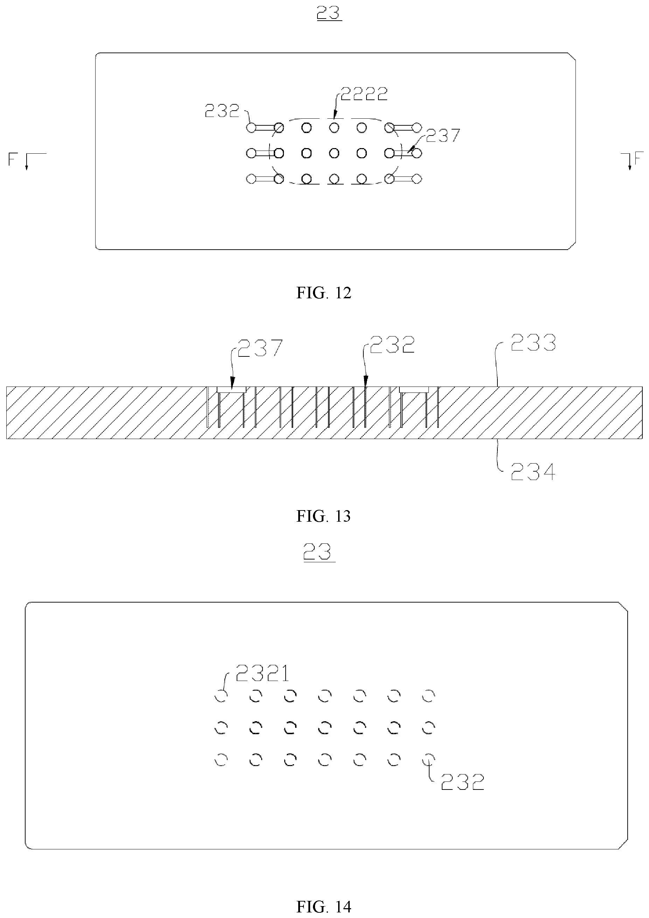

Referring to FIG. 12 and FIG. 13: FIG. 12 is a schematic front view of an insulator 23 provided according to still some other embodiments of the present application; and FIG. 13 is a cross-sectional view of FIG. 12 sectioned along a line F-F. In still some other embodiments, the insulator 23 is provided with a plurality of second pressure relief regions 231, and at least a part of the second pressure relief regions 231 are configured to be opened when the battery cell is under thermal runaway. In the first direction, the insulator 23 and the wall portion 2221 are disposed opposite to each other. The projection of the first pressure relief region 2222 on the insulator 23 in the first direction covers at least a part of the second pressure relief regions 231.

It should be noted that the dotted line in FIG. 12 represents the range of the projection of the first pressure relief region 2222 on the insulator 23 in the first direction.

"The projection of the first pressure relief region 2222 on the insulator 23 in the first direction covers at least a part of the second pressure relief regions 231" includes the projection of the first pressure relief region 2222 on the insulator 23 in the first direction completely covers the plurality of second pressure relief regions 231 and the projection of the first pressure relief region 2222 on the insulator 23 in the first direction covers a part of the second pressure relief regions 231. Put simply, all of the plurality of second pressure relief regions 231 may be disposed directly opposite to the first pressure relief region 2222, or there may be a part of the second pressure relief regions 231 deviated from the first pressure relief region 2222 (not directly opposite to the first pressure relief region 2222).

When the battery cell 20 is under thermal runaway, at least a part of the second pressure relief regions 231 are opened to allow gas to be relieved of pressure from the first pressure relief region 2222 through the insulator 23, which ensures high safety. By disposing the plurality of second pressure relief regions 231, the part between two adjacent second pressure relief regions 231 can achieve a reinforcing effect, so that the strength of the insulator 23 can be easily ensured to support the electrode assembly 21 to a certain extent.

In some embodiments, a first portion of the second pressure relief regions 231 are located within the range of the projection of the first pressure relief region 2222 on the insulator 23 in the first direction, and a second portion of the second pressure relief regions 231 are located outside the range of the projection of the first pressure relief region 2222 on the insulator 23 in the first direction.

The first portion of the second pressure relief regions 231 refer specifically to the second pressure relief regions 231 that are located within the range of the projection of the first pressure relief region 2222 on the insulator 23 in the first direction among the plurality of second pressure relief regions 231.

The second portion of the second pressure relief regions 231 refer specifically to the second pressure relief regions 231 that are located outside the range of the projection of the first pressure relief region 2222 on the insulator 23 in the first direction among the plurality of second pressure relief regions 231.

In this embodiment, there may exist a second pressure relief region 231 with one part located within the range of the projection of the first pressure relief region 2222 on the insulator 23 in the first direction, and the other part located outside the range of the projection of the first pressure relief region 2222 on the insulator 23 in the first direction.

The first portion of the second pressure relief regions 231 are disposed directly opposite to the first pressure relief region 2222, so that when the battery cell 20 is under thermal runaway, gas can be more quickly relieved of pressure from the first pressure relief region 2222 through the insulator 23. The second portion of the second pressure relief regions 231 are deviated from the first pressure relief region 2222, and the second portion of the second pressure relief regions 231 are opened when the battery cell 20 is under thermal runaway, thereby increasing the area for gas to pass through the insulator 23.

Referring to FIG. 12 and FIG. 13, in some embodiments, in the first direction, the insulator 23 is provided with the first surface 233 facing towards the wall portion 2221, and an exhaust slot 237 is disposed on the first surface 233 and is configured to guide gas from the second portion of the second pressure relief regions 231 to the first pressure relief region 2222 when the battery cell 20 is under thermal runaway.

The exhaust slot 237 is a slot structure disposed on the insulator 23. The exhaust slot 237 is disposed on the side of the insulator 23 facing towards the wall portion 2221. In the first direction, the exhaust slot 237 is recessed from the first surface 233 towards the second surface 234. When the battery cell 20 is under thermal runaway, gas is relieved from the second pressure relief region 231 through the insulator 23, and the exhaust slot 237 can guide gas discharged from a second portion of the second pressure relief regions 231 to the first pressure relief region 2222.

The gap between the insulator 23 and the wall portion 2221 is small, so that gas discharged from the second portion of the second pressure relief regions 231 is less prone to flow to the first pressure relief region 2222. By disposing the exhaust slot 237 on the first surface 233, a large gap is formed between the bottom wall of the exhaust slot 237 and the wall portion 2221, so that gas discharged from the second portion of the second pressure relief regions 231 can quickly flow to the first pressure relief region 2222 through the exhaust slot 237, thereby increasing the pressure relief speed.

Referring to FIG. 12 and FIG. 13, in some embodiments, the exhaust slot 237 extends to the second portion of the second pressure relief regions 231, and the projection of the first pressure relief region 2222 on the insulator 23 in the first direction covers a portion of the exhaust slot 237.

One end of the exhaust slot 237 is disposed in the second portion of the second pressure relief regions 231, and the other end of the exhaust slot 237 is within the range of the projection of the first pressure relief region 2222 on the insulator 23 in the first direction.

It should be noted that, when an edge of the other end of the exhaust slot 237 overlaps with an edge of the projection of the first pressure relief region 2222 on the insulator 23 in the first direction, the projection of the first pressure relief region 2222 on the insulator 23 in the first direction is also understood as covering a portion of the exhaust slot 237.

When the battery cell 20 is under thermal runaway, the second portion of the second pressure relief regions 231 are opened, and gas enters the exhaust slot 237 from the second portion of the second pressure relief regions 231, and flows to the first pressure relief region 2222 under the guidance of the exhaust slot 237, which is conducive to increasing the pressure relief speed and achieving smooth pressure relief.

Referring to FIG. 12 and FIG. 13, in some embodiments, the insulator 23 is provided with a plurality of fragile regions 232, and the fragile regions 232 correspond to the second pressure relief regions 231 one by one. The fragile region 232 is disposed along the edge of the second pressure relief region 231.

By disposing a plurality of fragile regions 232 on the insulator 23, the second pressure relief region 231 can be easily opened from the fragile region 232 when the battery cell 20 is under thermal runaway. Since the fragile regions 232 are disposed along the edge of the second pressure relief region 231, when the battery cell 20 is under thermal runaway, the second pressure relief region 231 is opened along the edge to provide a larger opening for gas to pass through.

Referring to FIG. 12 and FIG. 13, in some embodiments, each of the plurality of fragile regions 232 is a closed structure extending along a closed trajectory.

Referring to FIG. 14, FIG. 14 is a schematic front view of an insulator 23 provided according to yet some other embodiments of the present application. In yet some other embodiments, the fragile region 232 includes a plurality of fragile sections 2321, and the plurality of fragile sections 2321 are disposed at intervals in the circumferential direction of the second pressure relief region 231.

In some embodiments, a through hole 238 is formed on the insulator 23, and a region defined by peripheral walls of the through hole 238 is the second pressure relief region 231.

The second pressure relief region 231 is a region enclosed by the through hole 238 formed on the insulator 23. In this way, gas can reach the first pressure relief region 2222 through the insulator 23 no matter the battery cell 20 is in normal use or under thermal runaway.

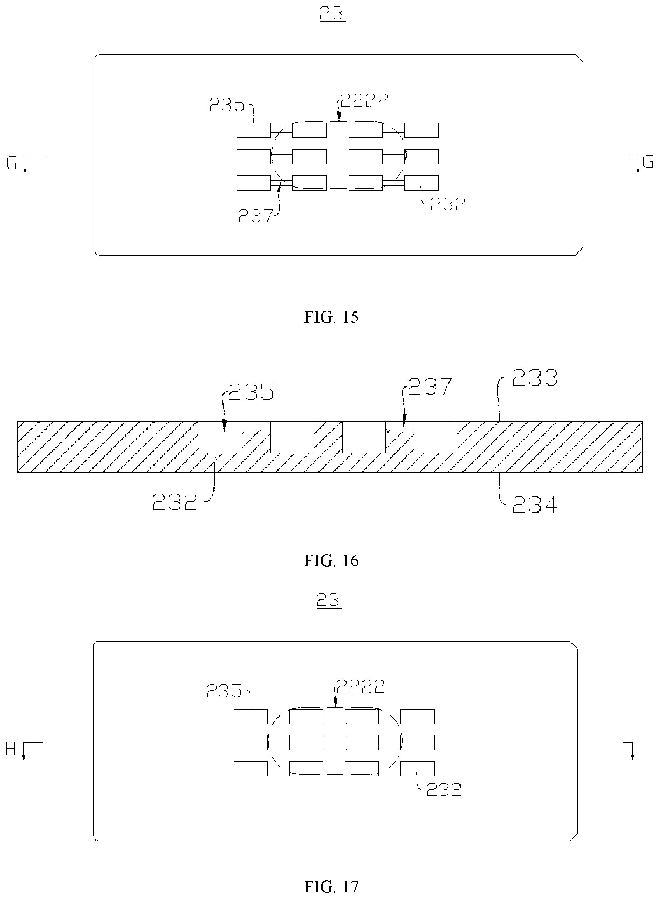

Referring to FIG. 15 and FIG. 16: FIG. 15 is a schematic front view of an insulator 23 provided according to still yet some other embodiments of the present application; and FIG. 16 is a cross-sectional view of FIG. 15 sectioned along a line G-G. In still yet some other embodiments, the insulator 23 is provided with a plurality of slots 235, and the bottom wall of each of the slots 235 is formed into the second pressure relief region 231.

It should be noted that the dotted line in FIG. 15 represents the range of the projection of the first pressure relief region 2222 on the insulator 23 in the first direction.

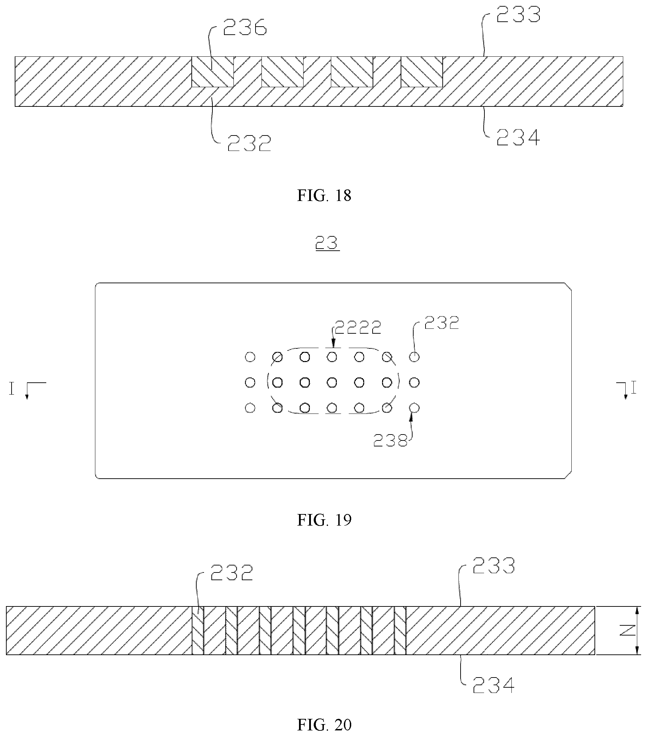

Referring to FIG. 17 and FIG. 18: FIG. 17 is a schematic front view of an insulator 23 provided according to yet some other embodiments of the present application; and FIG. 18 is a cross-sectional view of FIG. 17 sectioned along a line H-H. In yet some other embodiments, the slot 235 is internally provided with a filler 236, and the melting point of the filler 236 is lower than the melting point of the insulator 23.

It should be noted that the dotted line in FIG. 17 represents the range of the projection of the first pressure relief region 2222 on the insulator 23 in the first direction.

The filler 236 is filled in the slot 235. The filler 236 can be filled in part of the slot 235, or can be filled in the entire slot 235.

When the battery cell 20 is under thermal runaway, the temperature of gas is high, and the high-temperature gas will melt the filler 236. The bottom wall of the slot 235 is opened under the action of air pressure in the battery cell 20, thereby allowing gas to be discharged from the first pressure relief region 2222 through the insulator 23. The slot 235 is internally provided with a filler 236. On the one hand, the electrolyte solution is less prone to accumulate in the slot 235, which is conducive to ensuring a sufficient amount of electrolyte solution in the battery cell 20. On the other hand, the filler can achieve a good supporting and limiting effect on the electrode assembly 21.

Referring to FIG. 19 and FIG. 20: FIG. 19 is a schematic front view of an insulator 23 provided according to still some embodiments of the present application; and FIG. 20 is a cross-sectional view of FIG. 19 sectioned along a line I-I. In still some embodiments, the insulator 23 is provided with a plurality of through holes 238, and the second pressure relief regions 231 are disposed in the through holes 238 and connected with the insulator 23. The melting point of the second pressure relief region 231 is lower than the melting point of the insulator 23.

It should be noted that the dotted line in FIG. 19 represents the range of the projection of the first pressure relief region 2222 on the insulator 23 in the first direction.

In some embodiments, the insulator 23 assumes a flat plate structure.

The insulator 23 is designed as a flat plate structure. On the one hand, the flat plate structure occupies less volume of the battery cell 20; on the other hand, the flat plate structure can achieve a good supporting effect on the electrode assembly 21, and the electrode assembly 21 is less prone to damage.

In some embodiments, the thickness of the insulator 23 is N which satisfies: 0.5 mm ≤ N ≤ 10 mm.

N represents the thickness of the insulator 23, which can also be understood as the distance between the first surface 233 and the second surface 234 in the first direction.

Values of the thickness of the insulator 23 may be: N = 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, etc. The thickness of the insulator 23 is limited within a range of 0.5 mm to 10 mm, which can not only ensure the insulating effect and supporting capacity of the insulator 23, but also make the insulator 23 occupy less space inside the battery cell 20. When N < 0.5 mm, the insulator 23 has a small thickness, and poor supporting capacity and poor insulating effect (relatively easy to be broken down). When N > 10 mm, the insulator 23 is larger, which is not conducive to the improvement of the energy density of the battery cell 20.

In some embodiments, the battery cell 20 includes an electrode terminal, the shell 22 includes a first wall on which the electrode terminal is disposed, the electrode terminal is electrically connected with the electrode assembly 21, and the first wall is a wall different from the wall portion 2221.

The shell 22 includes a plurality of walls, such as a bottom wall, a side wall, and a top wall. The first wall refers to a wall provided with the electrode terminal. For example, if the electrode terminal is disposed on the bottom wall, the first wall refers to the bottom wall of the shell 22. For another example, if the electrode terminal is disposed on the top wall, the first wall refers to the top wall of the shell 22. For another example, if the electrode terminal is disposed on the side wall, the first wall refers to the side wall of the shell 22. For another example, if the electrode terminal is disposed on the end cap 221, the first wall may also refer to the end cap 221.

It should be noted that the first wall and the wall portion 2221 are different walls of the shell 22.

The electrode terminal can output electric energy from or input electric energy to the battery cell 20. The electrode terminal and the first pressure relief region 2222 are disposed on different walls, which omits the operation of forming a through hole on the insulator 23 to allow the electrode terminal to be electrically connected with the electrode assembly 21.

An embodiment of the present application provides a battery 100. The battery 100 includes a box 10 and the battery cell 20 described above. The battery cell 20 is accommodated in the box 10.

An embodiment of the present application provides an electrical device. The electrical device includes the battery 100 described above. The battery 100 is configured to provide electrical energy for the electrical device.

According to some embodiments of the present application, reference can be made to FIG. 4 and FIG. 5.

Embodiments of the present application provide a battery cell 20. The battery cell 20 includes an electrode assembly 21, a shell 22 and an insulator 23. The shell 22 is configured to accommodate the electrode assembly 21, where the shell 22 includes a wall portion 2221 disposed opposite to the electrode assembly 21 in the first direction, and the wall portion 2221 is provided with a first pressure relief region 2222. In the first direction, the insulator 23 is at least partially disposed between the electrode assembly 21 and the wall portion 2221 to dielectrically insulate the electrode assembly 21 and the wall portion 2221; where the insulator 23 is provided with a second pressure relief region 231 at a position corresponding to the first pressure relief region 2222, and the first pressure relief region 2222 and the second pressure relief region 231 are configured to be opened when the battery cell 20 is under thermal runaway.

The insulator 23 is provided with a fragile region 232, and the fragile region 232 is disposed around the outer side of the first pressure relief region 2222. The fragile region 232 includes a plurality of fragile sections 2321 arranged at intervals in the circumferential direction of the second pressure relief region 231. In the first direction, the fragile section 2321 penetrates through two opposite surfaces of the insulator 23.

The insulator 23 is disposed between the electrode assembly 21 of the battery cell 20 and the wall portion 2221 provided with the first pressure relief region 2222, and the insulator 23 is provided with the second pressure relief region 231 corresponding to the first pressure relief region 2222 in position. When the battery cell 20 is in normal use, the second pressure relief region 231 separates the electrode assembly 21 and the first pressure relief region 2222. Even if the battery cell 20 is subjected to vibration, an electrolyte solution in the shell 22 is less prone to wash against the first pressure relief region 2222, and therefore, burst pressure of the first pressure relief region 2222 is not affected. When the battery cell 20 is under thermal runaway, the second pressure relief region 231 allows the gas to be relieved of pressure from the first pressure relief region 2222 through the insulator 23, which ensures high safety.

By disposing a fragile region 232 on the insulator 23, the second pressure relief region 231 can be easily opened from the fragile region 232 when the battery cell 20 is under thermal runaway. Since the fragile region 232 is disposed along the edge of the second pressure relief region 231, and disposed around the outer side of the first pressure relief region 2222, a range of the second pressure relief region 231 is greater than a range of the first pressure relief region 2222. In other words, in the first direction, the projection of the second pressure relief region 231 on the wall portion 2221 covers the first pressure relief region 2222. In this way, when the battery cell 20 is under thermal runaway, an area of an opening formed when the second pressure relief region 231 is opened is greater than an area of the first pressure relief region 2222, which is conducive to smooth pressure relief. By disposing a plurality of fragile sections 2321, when the battery cell 20 is under thermal runaway, the second pressure relief region 231 can be opened from the position where the plurality of fragile sections 2321 are located, so that gas is relieved of pressure from the first pressure relief region 2222 through the insulator 23. Since the plurality of fragile sections 2321 are disposed at intervals in the circumferential direction of the second pressure relief region 231, the strength of the second pressure relief region 231 is high, so that the second pressure relief region 231 is unlikely to be opened by mistake even if the battery cell 20 is subjected to large vibration. By making the fragile sections 2321 penetrate both surfaces of the insulator 23 in the first direction, it is easier to open the second pressure relief region 231 when the battery cell 20 is under thermal runaway. In addition, although the fragile sections 2321 penetrate through both surfaces of the insulator 23 in the first direction, since the fragile region 232 is disposed around the outer side of the first pressure relief region 2222, the electrolyte solution passing through the insulator 23 is unlikely to directly wash against the first pressure relief region 2222, but may flow to the first pressure relief region 2222 only after passing through the insulator 23 and changing the direction. In this way, the electrolyte solution does not have strong impact force, and therefore, burst pressure of the first pressure relief region 2222 is not affected.

The foregoing are merely preferred embodiments of the present application and are not intended to limit the present application. To a person skilled in the art, various modifications and variations may be made to the present application. Any modifications, equivalent substitutions, improvements, etc. made within the spirit and principles of the present application shall be included within the scope of protection of the present application.

## Claims

1. A battery cell, comprising:
an electrode assembly;
a shell configured to accommodate the electrode assembly, wherein the shell comprises a wall portion, and the wall portion is provided with a first pressure relief region configured to be opened when the battery cell is under thermal runaway; and
an insulator at least partially disposed between the electrode assembly and the wall portion to dielectrically insulate the electrode assembly and the wall portion;
wherein the insulator is provided with a second pressure relief region at a position corresponding to the first pressure relief region, and the second pressure relief region is configured to allow gas to reach the first pressure relief region through the insulator when the battery cell is under thermal runaway.

2. The battery cell according to claim 1, wherein the second pressure relief region is configured to be opened when the battery cell is under thermal runaway.

3. The battery cell according to claim 2, wherein the wall portion is provided with a pressure relief slot, and the first pressure relief region is configured to be opened along the pressure relief slot when the battery cell is under thermal runaway; and in a first direction, the insulator and the wall portion are disposed opposite to each other, and a projection of the insulator covers the pressure relief slot.

4. The battery cell according to claim 3, wherein in the first direction, a projection of the second pressure relief region covers a projection of the first pressure relief region.

5. The battery cell according to claim 3 or 4, wherein in the first direction, the projection of the second pressure relief region covers the pressure relief slot.

6. The battery cell according to any one of claims 3 to 5, wherein the insulator is provided with a fragile region disposed along an edge of the second pressure relief region.

7. The battery cell according to claim 6, wherein the fragile region is disposed around an outer side of a projection of the first pressure relief region on the insulator in the first direction.

8. The battery cell according to claim 7, wherein the pressure relief slot is formed on the wall portion and is disposed along an edge of the first pressure relief region, and the fragile region is disposed around an outer side of a projection of the pressure relief slot on the insulator in the first direction.

9. The battery cell according to claim 7, wherein the battery cell comprises a pressure relief part, a pressure relief hole is formed on the wall portion, the pressure relief part covers the pressure relief hole, the pressure relief slot is formed on the pressure relief part, and the fragile region is disposed around an outer side of a projection of the pressure relief slot on the insulator in the first direction.

10. The battery cell according to claim 9, wherein the fragile region is disposed around an outer side of a projection of the pressure relief hole on the insulator in the first direction.

11. The battery cell according to any one of claims 6 to 10, wherein the fragile region comprises a plurality of fragile sections, and the plurality of fragile sections are arranged at intervals in a circumferential direction of the second pressure relief region.

12. The battery cell according to claim 11, wherein each of the fragile sections is in a shape of a strip, and a width of the fragile section is D1 which satisfies: D1 ≤ 2 mm.

13. The battery cell according to claim 11, wherein in the circumferential direction of the second pressure relief region, a distance between two adjacent fragile sections is D2 which satisfies: D2 ≤ 10 mm.

14. The battery cell according to any one of claims 6 to 13, wherein in a direction perpendicular to the first direction, a distance between the fragile region and the first pressure relief region is D3 which satisfies: D3 ≤ 3 mm.

15. The battery cell according to any one of claims 6 to 10, wherein the fragile region is a closed structure extending along a closed trajectory.

16. The battery cell according to any one of claims 6 to 15, wherein the insulator is provided with an indentation, a slot or a through hole to form the fragile region.

17. The battery cell according to any one of claims 6 to 15, wherein a melting point of the fragile region is lower than a melting point of the insulator.

18. The battery cell according to any one of claims 6 to 15, wherein the insulator is provided with an indentation, a slot or a through hole, the indentation, the slot or the through hole is filled with a filler, and a melting point of the filler is lower than a melting point of the insulator.

19. The battery cell according to claim 16 or 18, wherein the insulator is provided with an indentation or a slot to form the fragile region, the insulator is provided with a first surface facing towards the wall portion, and the indentation or the slot is disposed on the first surface.

20. The battery cell according to claim 19, wherein the fragile region comprises a plurality of slot sections and a plurality of hole sections, and in the circumferential direction **of the second** pressure relief region, the slot sections and the hole sections are disposed alternately; and
in the first direction, the insulator is provided with a first surface and a second surface opposite to each other, each of the slot sections is recessed from the first surface towards the second surface, and each of the hole sections runs through the first surface and the second surface.

21. The battery cell according to any one of claims 1 to 20, wherein the insulator is provided with a slot, and a bottom wall of the slot is formed into the second pressure relief region.

22. The battery cell according to any one of claims 1 to 20, wherein a melting point of the second pressure relief region is lower than the melting point of the insulator.

23. The battery cell according to claim 22, wherein a melting point of the second pressure relief region is M which satisfies: 80°C ≤ M ≤ 180°C.

24. The battery cell according to any one of claims 1 to 23, wherein the insulator is provided with a plurality of the second pressure relief regions, and at least a part of the second pressure relief regions are configured to be opened when the battery cell is under thermal runaway; and in the first direction, the insulator and the wall portion are disposed opposite to each other, and the projection of the first pressure relief region on the insulator in the first direction covers at least a part of the second pressure relief regions.

25. The battery cell according to claim 24, wherein a first portion of the second pressure relief regions are located within the range of the projection of the first pressure relief region on the insulator in the first direction, and a second portion of the second pressure relief regions are located outside the range of the projection of the first pressure relief region on the insulator in the first direction.

26. The battery cell according to claim 25, wherein in the first direction, the insulator is provided with the first surface facing towards the wall portion, and an exhaust slot is disposed on the first surface and is configured to guide gas from the second portion of the second pressure relief regions to the first pressure relief region when the battery cell is under thermal runaway.

27. The battery cell according to claim 26, wherein the exhaust slot extends to the second portion of the second pressure relief regions, and the projection of the first pressure relief region on the insulator in the first direction covers a part of the exhaust slot.

28. The battery cell according to any one of claims 24 to 27, wherein the insulator is provided with a plurality of fragile regions, and the fragile regions correspond to the second **pressure** relief regions one to one, and are disposed along an edge of the second pressure relief region.

29. The battery cell according to claim **1,** wherein a through hole is formed on the insulator, and a region defined by peripheral walls of the through hole is the second pressure relief region.

30. The battery cell according to any one of claims 1 to 29, wherein the insulator is a flat plate structure.

31. The battery cell according to claim 30, wherein a thickness of the insulator is N which satisfies: 0.5 mm ≤ N ≤ 10 mm.

32. The battery cell according to any one of claims 1 to 31, wherein the battery cell comprises an electrode terminal, the shell comprises a first wall on which the electrode terminal is disposed, the electrode terminal is electrically connected with the electrode assembly, and the first wall is a wall different from the wall portion.

33. A battery, comprising the battery cell according to any one of claims 1 to 32.

34. An electrical device, comprising the battery according to claim 33, wherein the battery is configured to provide electrical energy for the electrical device.
